# EUROPEAN PATENT SPECIFICATION

(11) **EP 1 647 147 B1**
(45) Date of publication and mention of the grant of the patent: **26.08.2009**
(21) Application number: 04771066.0
(22) Date of filing: 23.07.2004
(51) Int. Cl.: H04N 7/24, H04N 7/14

(54) **A METHOD AND DEVICE FOR CONFIGURING A MULTIMEDIA MESSAGE FOR PRESENTATION**
VERFAHREN UND EINRICHTUNG ZUM KONFIGURIEREN EINER MULTIMEDIA-NACHRICHT FÜR EINE PRÄSENTATION
PROCEDE ET DISPOSITIF DE CONFIGURATION D'UN MESSAGE MULTIMEDIA POUR LE PRESENTER

(30) Priority: 23.07.2003 JP 2003278509; 08.10.2003 JP 2003349186; 09.10.2003 JP 2003350557; 25.12.2003 JP 2003430940
(43) Date of publication of application: 19.04.2006
(73) Proprietor: CASIO COMPUTER CO., LTD., Tokyo 151-0071 (JP)
(72) Inventor: YAJI, Yoshitaka, Ome-shi, Tokyo 198-0024 (JP); MURAYAMA, Yoichi, Fussa-shi, Tokyo, 197-0011 (JP)
(74) Representative: Grünecker, Kinkeldey, Stockmair & Schwanhäusser Anwaltssozietät
(86) International application number: PCT/JP2004/010885
(87) International publication number: WO 2005/009044

(56) References cited:
- WO-A-03/077520
- WO-A-20/04014050
- US-A1- 2002 031 262
- JOKELA T: "Authoring tools for mobile multimedia content" ICME 2003 NOKIA RESEARCH CEBNTER, vol. 2, 6 July 2003 (2003-07-06), pages 637-640, XP010650636

## Description

The present invention relates to a wireless communication device comprising a function for creating and transmitting electronic mail (hereinafter denoted as "E-mail"), and more particularly related to a wireless communication device, dynamic image preparation method and dynamic image preparation program which attaches dynamic images to generated E-mails and transmits the E-mail messages.

A system which exchanges E-mail with various files attached is now universally known technology. In recent years, subscriber wireless communication terminals, such as a cellular phone (also commonly known as a mobile phone), are typically now equipped with an image pick-up function. Also, dynamic image files, digitized images (or images stored at a URL address of a homepage file or any other file supported by the Internet HTTP or FTP protocols) can be attached to an E-mail and transmitted to another user's destination via a wireless communication terminal. The E-mail text and images can be displayed on the user's wireless communication terminal. For example, Japanese Laid-Open Patent Application (Kokai) (A) No. 2002-359695 titled "MOBILE COMMUNICATION TERMINAL AND ITS MAIL TRANSMISSION CONTROL. PROGRAM."

However, in the transmission and reception using wireless communication devices by the above-mentioned conventional technology, there is a problem in which the wireless communication network where the affiliated wireless communication terminal is located restricts the amount of data sent and received in one E-mail message transmission.

Accordingly, for example, by acquiring imaging devices, such as a digital camera, etc. or by acquiring downloaded or dynamic images (movies/video) recordings, it is impracticable to attach an original movie file of comparatively large capacity to E-mail messages. There are a number of problems encountered with including original movie files as attachments in E-mail messages. Commonly, the E-mail sender has to edit and resize the original movie file(s) to the appropriate file size limit before transmission via E-mail, resulting in significantly shortened playback time as well as time consuming. Furthermore, since wireless communication devices only have the option to "save" the acquired original movie files in the type and size received, the E-mail sender (user of a wireless communication device) is not able to add special image effects, such as transitional effects, to original movie files easily and can not process these files randomly.

US patent application No. 2002/031262 describes an automatic method for editing video messages generated, for instance, by a cellular phone equipped with a digital camera. This reference discloses means for analysing video and audio content of the video message and selecting an image sequence between two time points determined in accordance therewith. This reference also discloses extracting the first image in the image sequence as an initial display image and arranging text thereon. Moreover, this reference discloses transmitting and receiving edited video messages via a wireless communication link. However, no mention is made on how to perform fade-in, fade-out, and cross-fade operations.

It is thus an aim of the present invention to provide an improved wireless communication device applied to a mobile phone system capable of dynamic image preparation and a corresponding image preparation method for such a wireless communication device.

This is achieved by the features of the independent claims. Preferred embodiments are subject matter of dependent claims.

The above and further objects and novel features of the present invention will more fully appear from the following detailed description when the same is read in conjunction with the accompanying drawings. It is to be expressly understood, however, that the drawings are for the purpose of illustration only and are not intended as a definition of the limits of the invention.

### Brief Description of the Drawings

FIGs. 1A and 1B are outline views (open state: front and back views) of the camera cellular phone 1 in the first embodiment of the present invention;
FIG. 2 is a block diagram showing the configuration of the camera cellular phone 1;
FIGs. 3A and 3B are conceptual diagrams showing the memory area configuration in the program ROM 125 and RAM 124, respectively, of the camera cellular phone 1;
FIG. 4 is a flowchart for explanation of the movie recording operation in the camera cellular phone 1 according to the first embodiment;
FIG. 5 is a flowchart for explanation of when the movie editing mode operation is selected;
FIG. 6 is a flowchart for explanation of the "CONVERSION INTO E-MAIL ATTACHMENT" setting;
FIGs. 7A, 7B and 7C are mimetic diagrams showing display examples of the main display in the "CONVERSION INTO E-MAIL ATTACHMENT" setting;
FIG. 8 is a mimetic diagram showing a display example of the main display in the "CONVERSION INTO E-MAIL ATTACHMENT" setting;
FIG. 9 is a mimetic diagram showing display examples of the main display in the CONVERSION INTO E-MAIL ATTACHMENT" setting;
FIG. 10 is a mimetic diagram showing a display example of the main display in the "CONVERSION INTO E-MAIL ATTACHMENT" setting;
FIG. 11 is a flowchart for explanation of the "CLIPPING" operation;
FIGs. 12A and 12B are mimetic diagrams showing display examples of the main display when "CLIPPING" is selected;
FIG. 13 is a mimetic diagram showing further display examples of the main display when "CLIPPING" is selected;
FIG. 14 is a mimetic diagram showing further display examples of the main display when "CLIPPING" is selected;
FIG. 15 is a flowchart for explanation of the "COMBINATION" operation;
FIGs. 16A, 16B, 16C and 16D are mimetic diagrams showing display examples of the main display when "COMBINATION" is selected;
FIG. 17 is a flowchart for explanation of the E-mail transmission operation;
FIG. 18 is a flowchart for explanation of the movie editing operation in the camera cellular phone 1 according to the second embodiment;
FIG. 19 is a flowchart for further explanation of the movie editing operation in the camera cellular phone 1 according to the second embodiment;
FIG. 20 is a flowchart for further explanation of the movie editing operation in the camera cellular phone 1 according to the second embodiment;
FIG. 21 is a flowchart for further explanation of the movie editing operation in the camera cellular phone 1 according to the second embodiment;
FIG. 22 is a flowchart for further explanation of the movie editing operation in the camera cellular phone 1 according to the second embodiment;
FIG. 23 is a mimetic diagram showing the movie selection screen in the movie editing process according to the second embodiment;
FIG. 24 is a mimetic diagram showing the screen which displays the selection numbers in the movie thumbnails of the movie editing process according to the second embodiment;
FIGs. 25A and 25B are mimetic diagrams showing the movie switching pattern selection screens (listing or thumbnails, respectively);
FIG. 26 is a mimetic diagram showing the message input screen;
FIGs. 27A and 27B are mimetic diagrams showing the opening selection screens (listing or thumbnails, respectively);
FIGs. 28A and 28B are mimetic diagrams showing the ending selection screens (listing or thumbnails, respectively);
FIGs. 29A, 29B and 29C are conceptual diagrams showing the status of transitional effects appended to the opening, ending or to both sides of one movie file;
FIGs. 30A and 30B are conceptual diagrams showing the status of transitional effects added to the switching portion and further the status of the transitional effects appended to the opening and ending relative to two movies;
FIG. 31 is a flowchart for explanation of the movie editing operation in the camera cellular phone 1 according to the third embodiment;
FIG. 32 is a flowchart for further explanation of the movie editing operation in the camera cellular phone 1 according to the third embodiment;
FIG. 33 is a flowchart for further explanation of the movie editing operation in the camera cellular phone 1 according to the third embodiment;
FIG. 34 is a flowchart for further explanation of the movie editing operation in the camera cellular phone 1 according to the third embodiment;
FIG. 35 is a flowchart for further explanation of the movie editing operation in the camera cellular phone 1 according to the third embodiment;
FIG. 36 is a flowchart for further explanation of the movie editing operation in the camera cellular phone 1 according to the third embodiment;
FIG. 37 is a flowchart for further explanation of the movie editing operation in the camera cellular phone 1 according to the third embodiment;
FIG. 38 is a mimetic diagram showing the preview screen of the transition movie between two movies;
FIG. 39 is a mimetic diagram showing the preview screen of the transition movie in the opening;
FIG. 40 is a mimetic diagram showing the preview screen of the transition movie in the ending;
FIG. 41 is a flowchart for explanation of the movie editing operation in the camera cellular phone 1 according to the fourth embodiment;
FIG. 42 is a flowchart for further explanation of the movie editing operation in the camera cellular phone 1 according to the fourth embodiment;
FIG. 43 is a flowchart for further explanation of the movie editing operation in the camera cellular phone 1 according to the fourth embodiment;
FIG. 44 is a flowchart for further explanation of the movie editing operation in the camera cellular phone 1 according to the fourth embodiment;
FIG. 45 is a flowchart for further explanation of the movie editing operation in the camera cellular phone 1 according to the fourth embodiment;
FIG. 46 is a flowchart for further explanation of the movie editing operation in the camera cellular phone 1 according to the fourth embodiment;
FIG. 47 is a flowchart for further explanation of the movie editing operation in the camera cellular phone 1 according to the fourth embodiment;
FIG. 48 is a flowchart for further explanation of the movie editing operation in the camera cellular phone 1 according to the fourth embodiment;
FIG. 49 is a flowchart for explanation of the movie editing operation (transition operation generation) in the camera cellular phone 1 according to the fourth embodiment;
FIG. 50 is a mimetic diagram showing the preview screen of the transition movie in the opening;
FIG. 51 is a mimetic diagram showing the submenu screen when selecting the background image and title input used for the opening or ending;
FIG. 52 is a mimetic diagram showing the screen when selecting the background image for the opening or ending;
FIG. 53 is amimetic diagram showing the screen which specifies the clipping area used for the opening or ending;
FIG. 54 is a mimetic diagram showing the preview screen of the transition movie which switches to the top frame from the image selected in the opening;
FIG. 55 is a mimetic diagram showing the preview screen of the transition movie in the ending; and
FIG. 56 is a mimetic diagram showing the preview screen of the transition movie which switches to the image selected from the last frame of the movie in the ending.

### Best Mode for Carrying Out the Invention

The present invention will hereinafter be described in detail with reference to the preferred embodiments shown in the accompanying drawings as applied a wireless communication device comprising a function for creating and transmitting electronic mail (hereinafter denoted as "E-mail"), and more particularly related to a wireless communication device, dynamic image preparation method and dynamic image preparation program which attaches dynamic images (synonymous and hereinafter denoted as "movie files") to generated E-mails and transmits the E-mail messages. In the following embodiments, a cellular phone is synonymous with a cell phone, mobile phone or cellular mobile, which is the type of wireless communications most familiar to mobile phone users.

### <First embodiment>

### (The configuration of the embodiment)

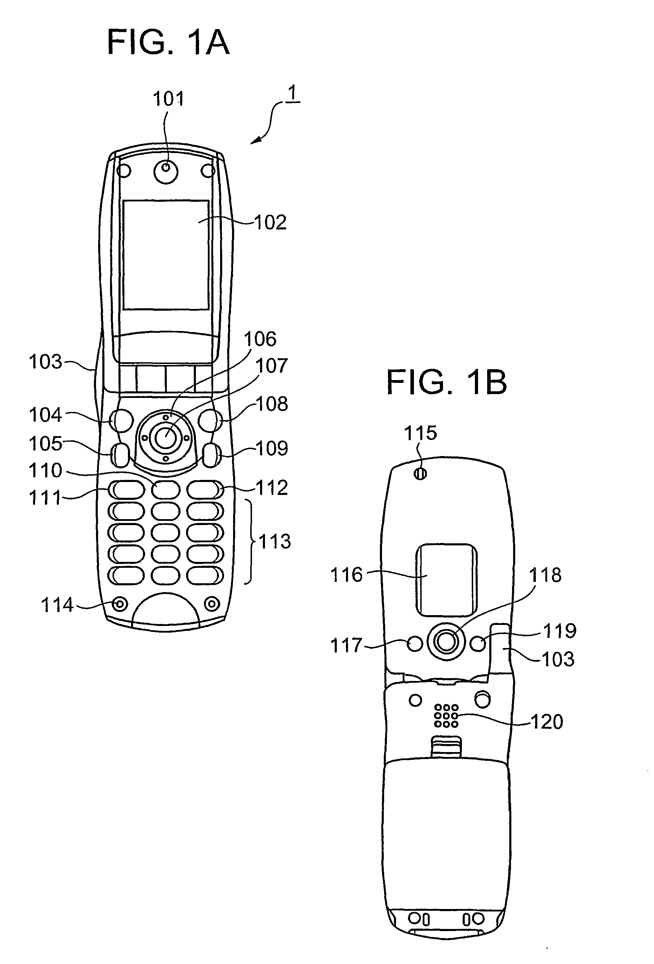

FIG. 1A is an outline view of the camera cellular phone 1 front side in the open state and FIG. 1B is an outline view of the camera cellular phone 1 back side in the open state according to the embodiment of the present invention. The cellular phone 1 in the embodiments is a foldable type structure consisting of a cover section and main body section. A speaker 101 is provided on the front side of the cover section for audio output. A display section 102 (main display section) consists of a color liquid crystal display (LCD) having QVGA definition (Quarter VGA meaning resolution of 320 x 240 dots or 76,800 pixels) which can display recorded images and downloaded images. An antenna 103 is mounted on the back side of the main body section and is retractable.

A camera key 104 is the key used for directing the shift to the recording mode and activating the recording section (image pick-up section). An E-mail key 105 is the key used for directing the shift to the E-mail mode and the loading an E-mail program. A cross key 106 is the key used for directing movement of the cursor and for movement of the focus. A determination key 107 is used for determining mode selection and also controls the shutter operation in the case of movie recording. An address key 108 is the key used for displaying address book data. An Internet key 109 is the key used for accessing the Internet. A clear key 110 is the key for canceling a selection, etc. An on-hook key 111 is the key used for connecting to a (telephone line. An off-hook key 112 is the key used for disconnecting from a telephone line. A ten-keypad 113 is the keys used for performing character input and dialing input.

A microphone 114 is mounted in the lower part of the main body section and carries out voice input at the time of a telephone call. A microphone 115 is used for recording input of voice memos, the audio when movie recording, etc. A sub-display 116 is mounted on the back of the cover section of camera cellular phone 1 and when in a closed state is used for displaying time, notification of incoming calls and arrival of E-mails or as an auxiliary screen when taking still pictures or movie recording. A LED 117 emits light for providing notification of incoming calls and E-mail arrival.

An image pick-up lens 118 is provided directly below the lower part of the sub-display 116 mounted on the back of the cover section 2 for recording of still images or movies. An LED 119 is used for the flash function which switches on at the time of still images or movie recording to prevent underexposures. An information speaker 120 announces the arrival of E-mail, an emergency etc. and is located on the back of the main body section so that informational sounds can be heard even when the cover section and the main body section are closed in a folded state.

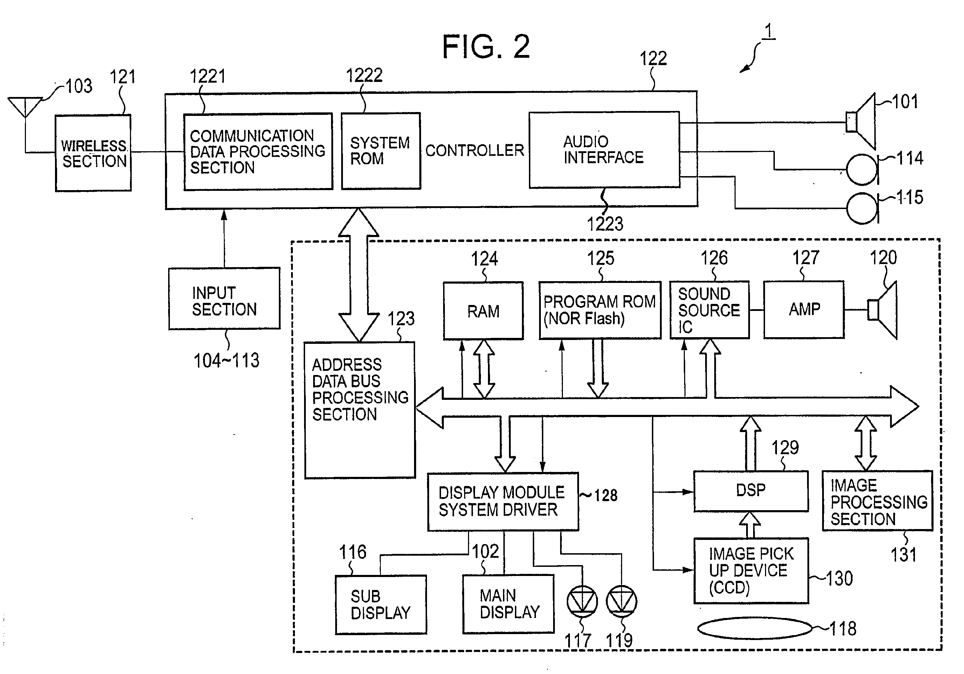

Next, FIG. 2 is a block diagram showing the configuration of the camera cellular phone 1 mentioned above. Referring to the drawing, a wireless transceiver section 121 performs wireless communication processing functions including bi-phase modulation based on the Phase-Shift Keying (PSK) technique and terminal authentication processing based on the Code-Division. Multiple Access (CDMA) system, such as sending and receiving audio and data (E-mail data) by performing modulation/demodulation, etc. via the antenna 103.

A control section 122 controls the appropriate system components including the Internet (WWW) connection control. A communication data processing section 1221 executes data processing suited to the communications protocol including a Code-Excited Linear Prediction (CELP) standard vocoder and voice encoding/decoding processing circuit, a packet data generation circuit and a packet data restoration circuit. A system Read-Only Memory (ROM) 1222 stores the basic system programs for controlling the appropriate system components. An audio interface 1223 performs input-output processing of the audio signals processed in the communication data processing section 1221 in which the audio from the microphone 114 or the microphone 115 for sound recording is inputted and converted to audio signals and the audio signals are outputted from the speaker 101.

An address data bus processing section 123 controls and manages the data input-output timing, etc. with the peripheral circuit (denoted by the dashed line frame). A Random Access Memory (RAM) 124 memorizes various data generated within the device, such as address book data, E-mail data, etc. A program ROM 125 consists of a rewritable Flash ROM and stores various application programs.

A display module system driver 128 drives the sub-display 116, the main display 102, and the LEDs 117, 119. A sound source. IC 126 generates the ring tone, etc. An amplifier (AMP) 127 amplifies the audio signals from the sound source IC 126 which is outputted from the speaker 120. An image pick-up device 130 consists of a Charged Coupled Device (CCD) or Complementary Metal Oxide Semiconductor (CMOS) light sensor and captures images focused with the image pick-up lens 118 as color images. A Digital Signal Processor (DSP) performs digital signal processing of the images captured with the image pick-up device 130. An image processing section 131, in the below-mentioned processing, executes compression encoding of a movie inputted via the image pick-up device based on Moving Picture Experts Group-4 (MPEG-4) real-time technology and stores the file in the other work memory 1244 of the RAM 124. In the movie editing mode described later, while performing expansion processing and playback displaybefore editing a movie file which is suitable for size conversion, clipping processing and combination processing, the movie after editing is converted to file format using the compression encoding method based on MPEG-2 or MPEG-4 which then can be generated as a movie file for use in an E-mail attachment.

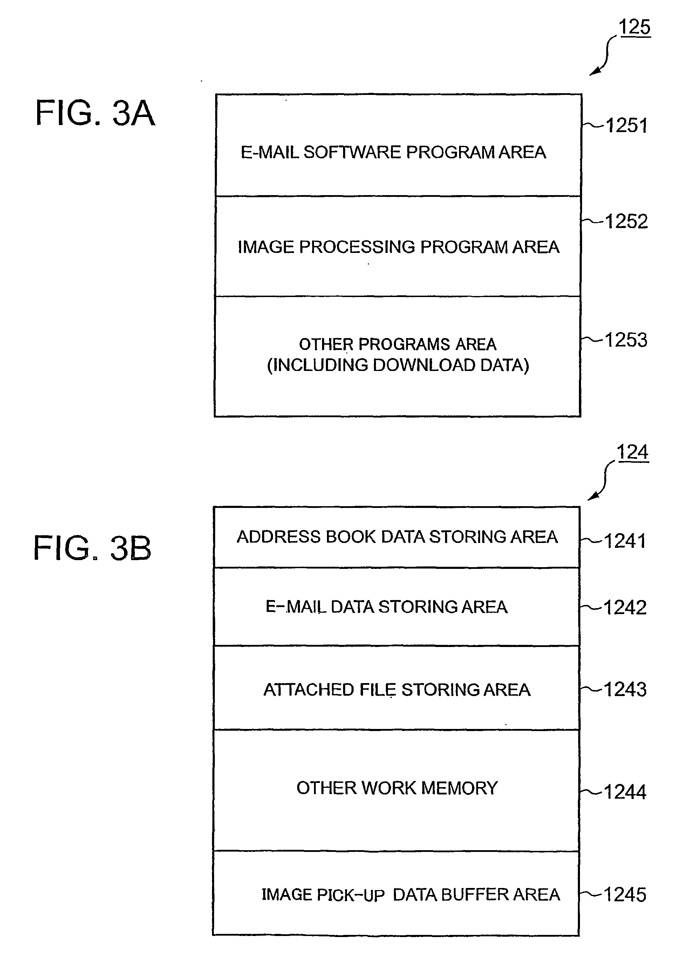

Next, FIG. 3A is a conceptual diagram showing the memory area configuration in the program ROM 125 of the camera cellular phone 1. The program ROM 125 stores the software programs which are a feature of the embodiment. The program ROM 125 consists of an E-mail software program area 1251, an image processing program area 1252 and other programs area 1253.

The E-mail software program area 1251 stores a known E-mail software program. The image processing program area 1252 stores each image processing program for the various conversion processes of the data imaged and digitally encoded by the image pick-up section (the image pick-up lens 118, the image pick-up device 130 and the DSP 129). The related resize processing for E-mail attachments, trimming processing of predetermined playback time, combination processing of associated movie data and decoding of movie files are executed in the image processing section 131 as opposed to movie data which is buffered in an image pick-up data buffer area 1245. The recorded movie data or trimmed, clipped and combined movies are converted (encoded/re-encoded) to file format using the compression encoding method based on MPEG-2 or MPEG-4 and decoding processing outputs to the main display 102 or the sub-display 116 as a playback movie. In addition, the image processing program can be software downloaded from a server via the Internet. The other programs area 1253 stores application programs other than those mentioned above.

Next, FIG. 3B is a conceptual diagram showing the memory area configuration in the program RAM 124 of the camera cellular phone 1. The program RAM 124 consists of an address book data storing area 1241, an E-mail data storing area 1242, an attached file storing area 1243, other work memory 1244 and the image pick-up data buffer area 1245. The address book data storing area 1241 stores a plurality of names, telephone numbers. E-mail addresses etc. as a set of records. The E-mail data storing area-1242 stores E-mail data created and E-mail data received using E-mail software. The attached file storing area 1243 stores the attached files downloaded from E-mail messages. The,other work memory 1244 stores various data as other work memory. The image pick-up data buffer area 1245 is a storage area for one time buffering of images in the process of recording.

### (The operation of the embodiment)

Next, the operation of the embodiment mentioned above will be explained.

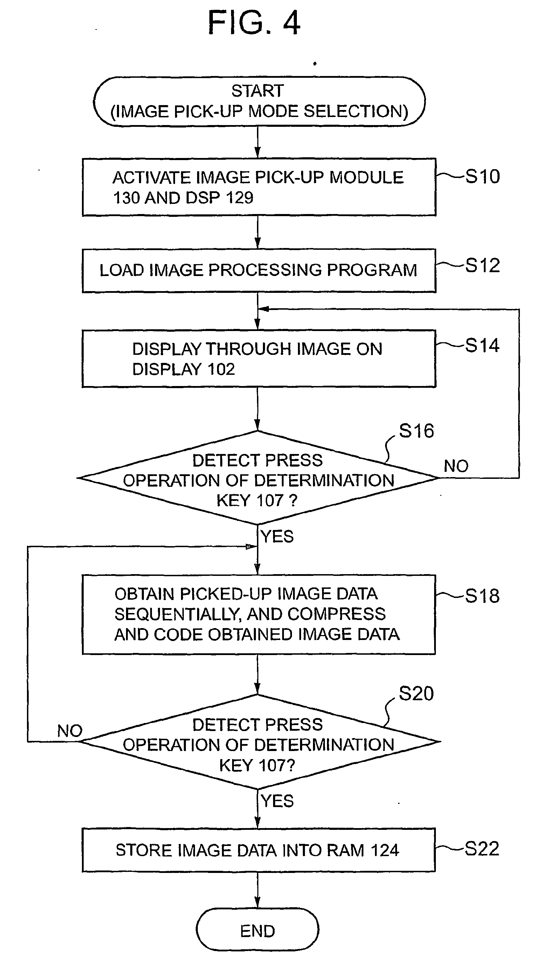

### (Movie recording - FIG. 4)

Initially, movie recording will be explained. FIG. 4 is a flowchart for explanation of the movie recording operation in the camera cellular phone 1 according to the first embodiment. Initially, the image pick-up device 130 and the DSP 129 are activated (Step S10). Next, an image processing program is loaded and the image processing section 131 is operated (Step S12) with the through image displayed on the main display 102 (Step S14). Next, the operation judges whether or not the determination key 107 has been pressed (Step S16). If the determination key 107 has not been pressed, the operation returns to Step S14 and continues displaying the through image.

Conversely, if the determination key 107 has been pressed, the picked-up image data is taken in sequentially and outputted to the image processing section 131 simultaneously where the data undergoes compression encoding and made into a file (Step S18). The take-in process of the image pick-up data can be continued until reaching the full storage capacity of the image pick-up data buffer area 1245 at sizes (L = Height 176 dots x Width 144 dots, M = Height 128 dots x Width 96 and S = Height 96 dots x Width 80 dots) set in advance at the time of initiating the movie recording mode. Also, the operation rejudges whether or not the determination key 107 has been pressed (Step S20). If the determination key 107 has not been pressed, the operation reverts to Step 18 and continues image pick-up.

Meanwhile, if the determination key 107 has been pressed, the filename based on a time stamp is appended to the encoded movie file and stored in the other work memory 1244 of the RAM 124 as the original movie file (Step S22). The operation then reverts to Step S14 and continues the above-mentioned processing.

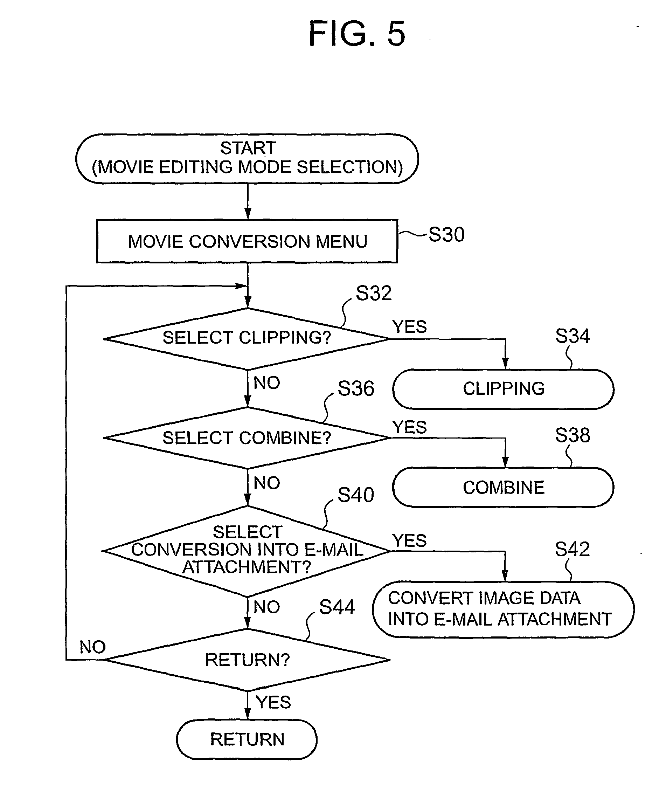

### (Movie editing mode - FIG. 5)

Next, the movie editing mode will be explained. FIG. 5 is a flowchart for explanation of when the movie editing mode operation is selected. Initially, selection of the movie editing mode will display a movie conversion menu on the main display 102 (Step S30). The movie conversion menu shows the available edit function items, such as "CLIPPING", "COMBINE", "CONVERSION INTO E-MAIL ATTACHMENT" , etc. Next, in the movie conversion menu, the operation judges whether or not "CLIPPING" has been selected for only clipping the amount desired playback time from the original movie file (Step S32). If "CLIPPING" is selected, the operation executes "CLIPPING" processing described later (Step S34). Meanwhile, if "CLIPPING" is not selected, the operation judges whether or not "COMBINE" is selected for combining a plurality of original movie files into one movie (Step S36) and if selected executes "COMBINATION" processing described later (Step S38).

Furthermore, if "CLIPPING" and "COMBINE" are not selected, the operation judges whether or not "CONVERSION INTO E-MAIL ATTACHMENT" is selected for editing the image data for conversion into E-mail attachment (Step S40). If "CONVERSION INTO E-MAIL ATTACHMENT" is selected, the operation executes "CONVERT TO E-MAIL ATTACHMENT" processing described later (Step S42). If none of the edit function items are selected, the operation judges whether or not the "RETURN" button is selected (Step S44). If the "RETURN" button is not selected, the operation reverts to Step S32 and repeats the above-mentioned processing. Meanwhile, if the "RETURN" button is selected, the operation returns to the main menu (or default window, etc.) which is not shown.

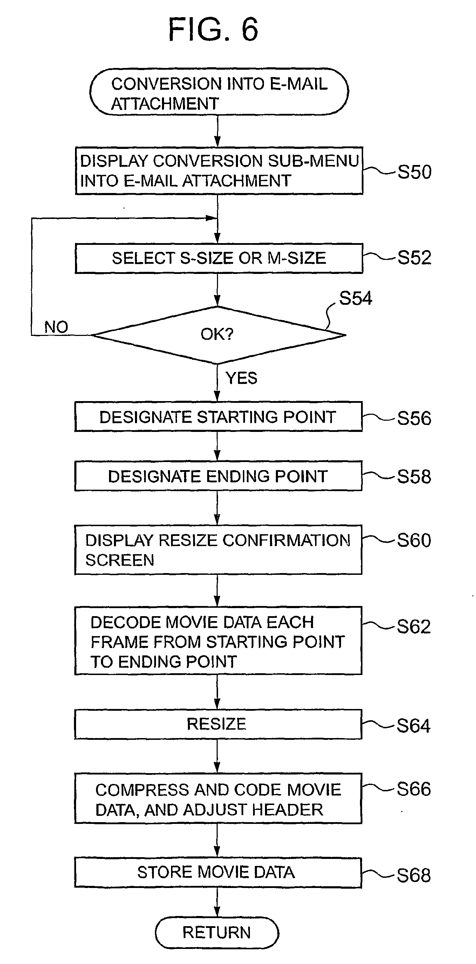

### (Conversion processing - FIG. 6)

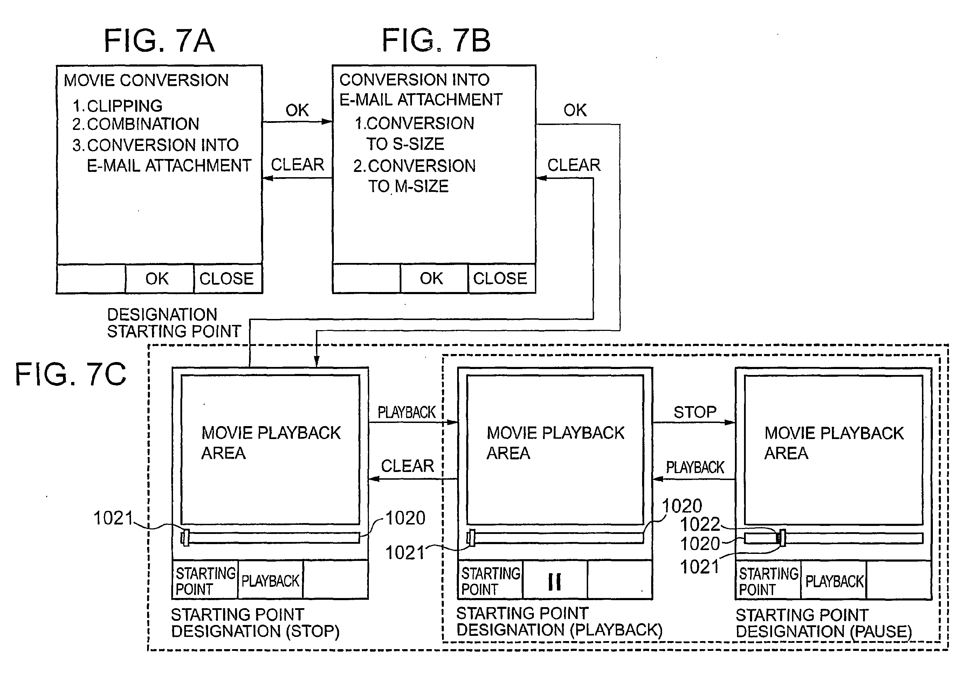

Next, in the movie conversion menu mentioned above, the operation when the "CONVERSION INTO E-MAIL ATTACHMENT" is selectedwill be explained. FIG. 6 is a flowchart for explanation of the "CONVERSION INTO E-MAIL ATTACHMENT" operation. FIGs. 7A, 7B and 7C are mimetic diagrams showing display examples of the main display in the "CONVERSION INTO E-MAIL ATTACHMENT" setting.

As shown in FIG. 7A in the movie conversion menu, the original movie file to be used as the object for editing is read from the other work memory 1244. The top frame is shown when the "CONVERSION INTO E-MAIL ATTACHMENT" is selected and the "CONVERSION INTO E-MAIL ATTACHIHENT" sub-menu is displayed in the E-mail attachment as shown in FIG. 7B (Step S50). At the conversion sub-menu, conversion to S-size or M-size of the movie size attached to an E-mail is selected (Step S52). Next, the operation judges whether or not "OK" is selected at the conversion sub-menu as shown in FIG. 7B (Step S54). After the conversion size is chosen and when "OK" is selected, first a starting point position is designated in order to perform clipping of the movie (Step S56).

Designation of the starting point position operates the "PLAYBACK" button (equivalent to the determination key 107) as shown in FIG. 7C. Afterwards expansion processing of the movie file used as the object for editing is executed and the playback display is accomplished to the main display as a movie. At this stage, while the user observes the movie replay in the movie playback area of the main display 102 and once the desired display timing is reached for setting a starting point position, the "PAUSE" (shown as two vertical bars in the diagram) button (equivalent to the determination key 107) is operated. Subsequently, the start frame of the movie file is designated and clipped for use in an E-mail attachment by operating the "STARTING POINT" button (equivalent to the camera key 104). Additionally, during movie playback in the progress bar 1020 in the lower part of the movie playback area the icon 1021, which is equivalent to the frames currently being replayed, moves to the right and is shown while the entire movie is replayed. The determined starting point position will be shown with the starting point position marker 1022 on the progress bar 1020.

When the starting point position marker 1022 is shown on the progress bar 1020, the ending point position marker 1023 corresponding to 15 second intervals will automatically be shown and the ending point position is designated (Step S58).

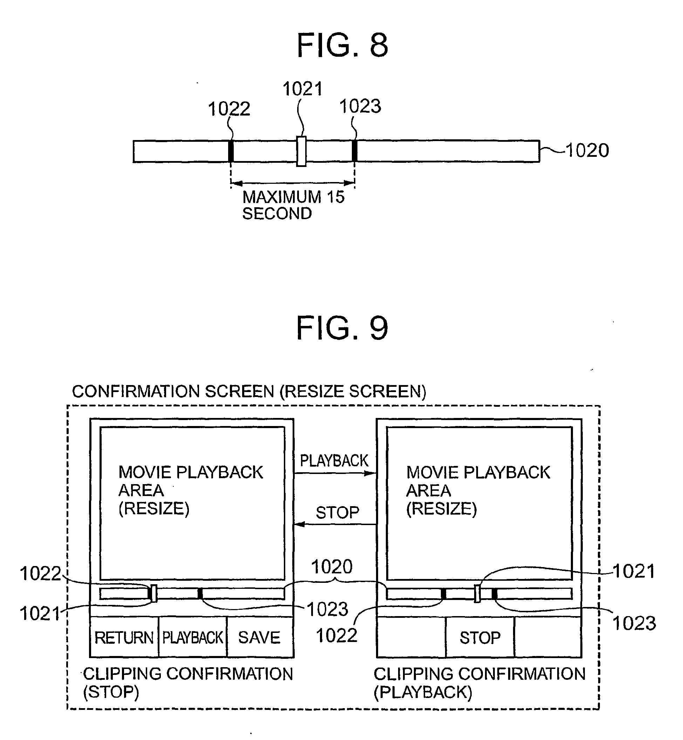

Referring to FIG. 8, the starting point position marker 1022 and the ending point position marker 1023 are shown on the progress bar 1020. As mentioned above, the starting point position marker 1022 and the ending point position marker 1023 displayed on the progress bar 1020 represent the clipped portion of a movie.

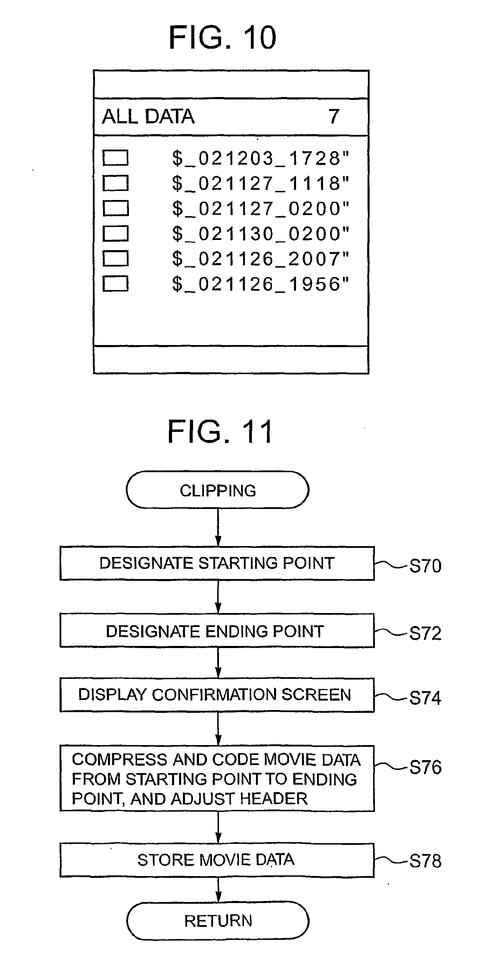

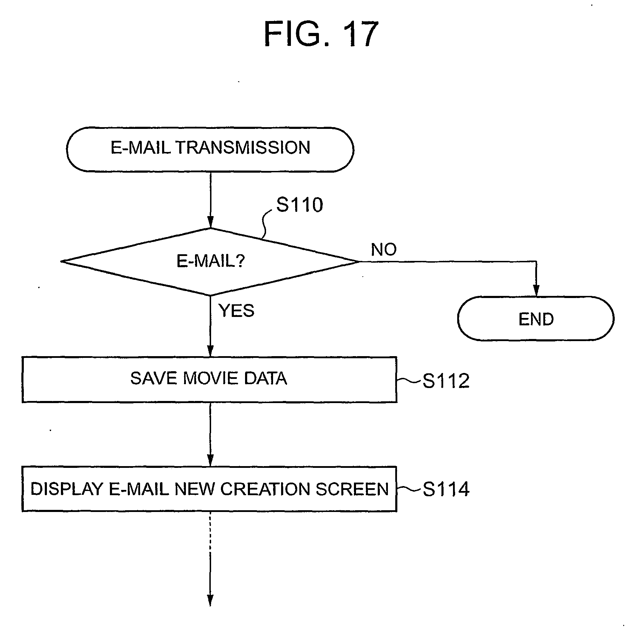

When the clipping positions are designated, the confirmation screen shown in FIG. 9 is displayed next (Step S60). At the confirmation screen, when the "PLAYBACK" button is operated the movie will be replayed from the starting point position to the ending point position mentioned above until the "STOP" button is operated. At this stage, the movie size is resized to S-size or M-size designated at Step S52. At the confirmation screen, when the "SAVE" button is operated, next the operation decodes every frame of the movie data from the starting point position to the ending point position (Step S62). Then the operation resizes to the size designated at Step S52 (Step S64) This is followed by compression encoding to the specification (low bit-rate) which can be attached to an E-mail message and file header is adjusted (Step S66). Furthermore, the operation saves the file as a new movie in the other work memory 1244 of the RAM 124 (Step S68). After save completion a listing of movies saved is displayed as shown in FIG. 10 as the operation proceeds automatically in sequence with the E-mail transmission flowchart of FIG. 17.

### (Movie clipping processing- FIG. 11)

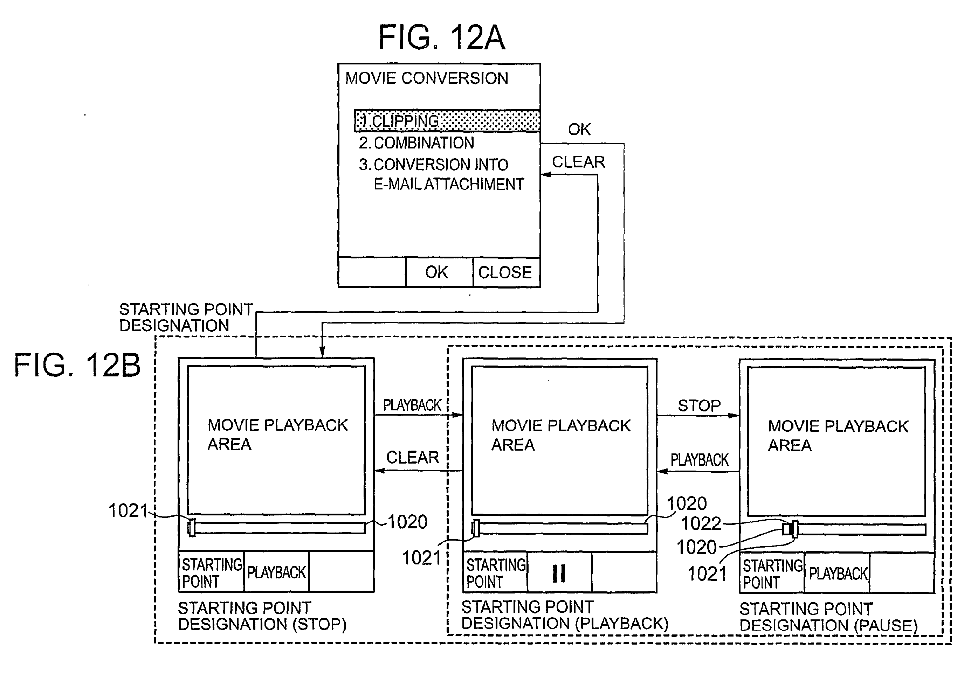

Next, in the movie conversion menu mentioned above, the operation when "CLIPPING" is selected will be explained. FIG. 11 is a flowchart for explanation of the "CLAPPING" operation. FIGs. 12A-12B, 13, and 14 are mimetic diagrams showing display examples of the main display when "CLIPPING" is selected.

In the movie conversion menu as shown in FIG. 12A, when "CLIPPING" is selected, the user designates a starting point position first to a movie file selected at random and read from the other work memory 1244 for clipping the movie (Step S70). At the starting point position designation, as shown in FIG. 12B, the user operates the "PLAYBACK" button (equivalent to the determination key 107) and the movie replay is observed in the movie playback area of the main display 102. When the desired starting point position is reached, the "PAUSE" (shown as two vertical bars in the diagram) button (equivalent to the determination key 107) is operated, the movie pauses and subsequently the "STARTING POINT" button is operated. Accordingly, the top frame of the movie to be clipped is designates.

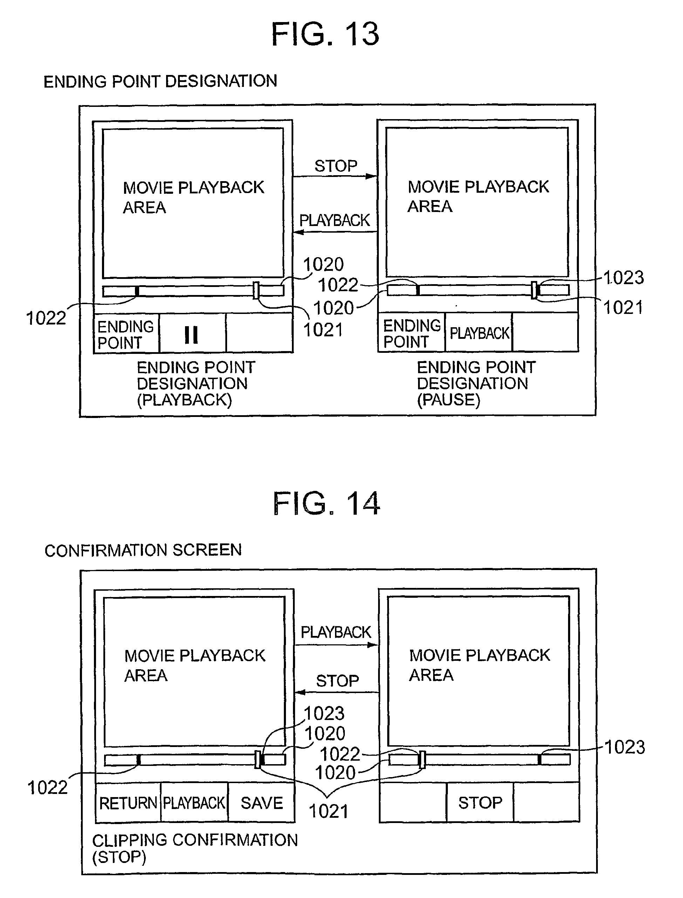

Next, the user designates the ending point position of clipping (Step S72). At the ending point position designation as shown in FIG. 13, the user operates the "PLAYBACK" button and the movie replay is observed in the movie playback area of the main display 102. When the desired ending point position is reached, the "PAUSE" (shown as two vertical bars in the diagram) button is operated, the movie pauses and subsequently the "ENDING POINT" button is operated. Accordingly, the last frame of the movie to be clipped is designated.

As mentioned above, the starting point position marker 1022 and the ending point positionmarker 1023 displayed on the progress bar 1020 represent the clipped portion of a movie.

In designation of the clipping position, the confirmation screen will be displayed next as shown in FIG. 14 (Step S74). At the confirmation screen, when the "PLAYBACK" button is operated the movie will be replayed from the starting point position marker 1022 to the ending point position marker 1023 as mentioned above until the "STOP" button is operated. At the confirmation screen when the "SAVE" button is operated, next the operation performs compression encoding from the starting point position to the ending point position and the file header is adjusted (Step S76). Furthermore, the operation saves the file as a new movie in the other work memory 1244 of the RAM 124 (Step S78). After the save is completed, as shown in FIG. 10 mentioned above, a directory listing showing the movies saved is displayed.

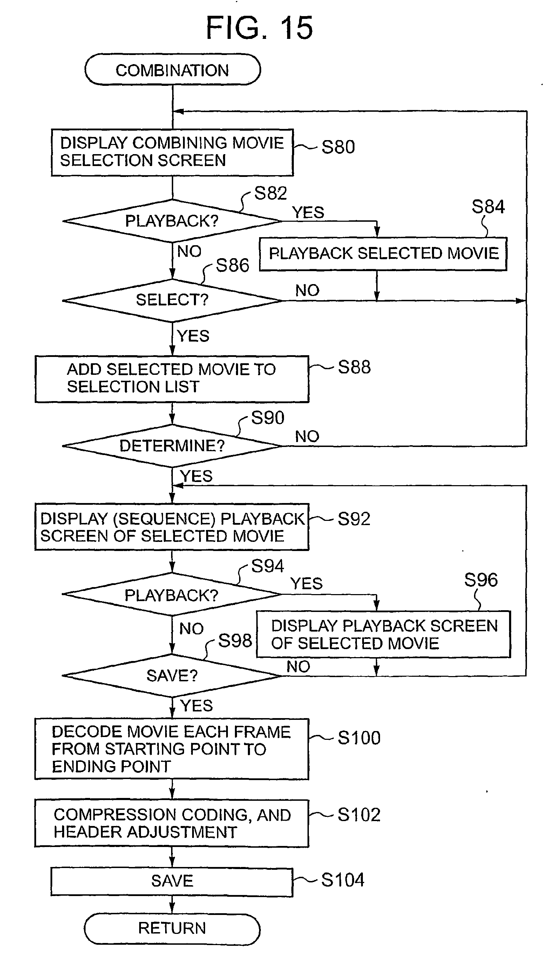

### (Combination processing - FIG. 15)

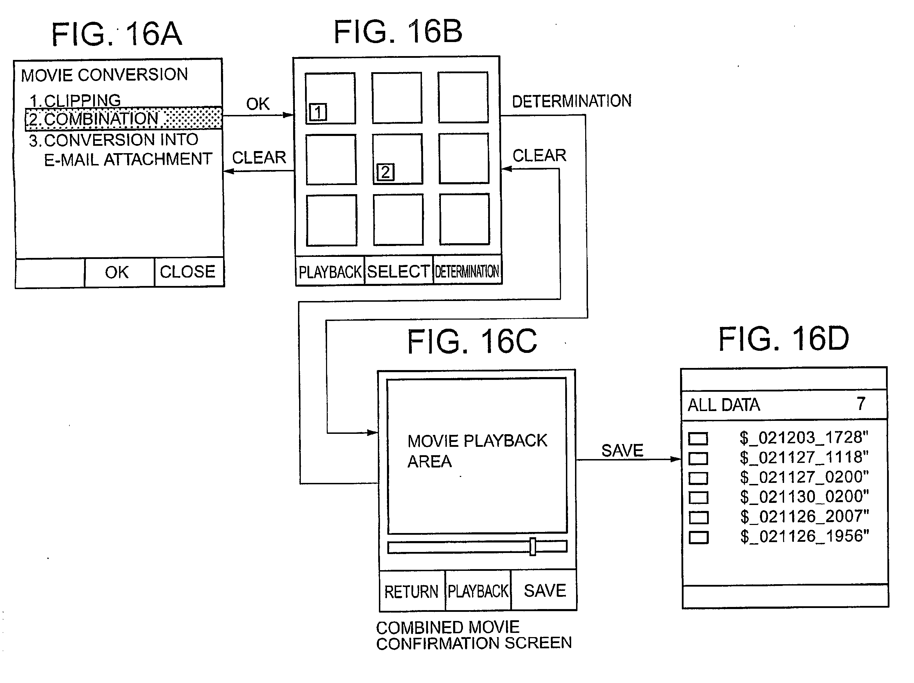

Next, in the movie conversion menu mentioned above, the operation when "COMBINATION" is selected will be explained. Here, FIG. 15 is a flowchart for explanation of the "COMBINATION" operation. FIGs. 16A, 16B, 16C and 16D are mimetic diagrams showing display examples of the main display when "COMBINATION" is selected.

In the movie conversion menu as shown in FIG. 16A, when "COMBINATION" is selected for combining at least two movie files read randomly from the other work memory 1244, first a selection screen as shown in FIG. 16B for selecting movies to be combined is displayed on the main display 102 (Step S80). The selection screen shows a directory listing of thumbnails representing the top frames of movies already saved in the other work memory 1244. Next, in the selection screen shown in FIG. 16B, the operation judges whether or not the "PLAYBACK" button has been operated ( Step S82). If the "PLAYBACK" button has been operated, the movie selected with the cursor is replayed (Step S84) and afterwards reverts to Step S80 and repeats the above-mentioned processing.

Meanwhile, if the "PLAYBACK" button has not been operated, the operation judges whether or not the "SELECT" button has been operated. Also, if the "SELECT" button has been operated and the cursor is situated on an unchecked (non-selected) movie, then at that time "SELECT" will be shown and a number indicating the sequence selected is appended to the thumbnail as well as added to the selection list (Step S88). In addition, a selection is cancelled if an already checked movie (previously selected) is selected again. Next, the operation judges whether or not the "DETERMINE" button has been operated (Step S90). Also, if neither the "SELECT" nor "DETERMINE" buttons have not been operated, the operation reverts to Step S80 and repeats the above-mentioned processing.

Additionally, in movie selection the size of the movie selected is that of the 1^{st} in sequence making it not possible to select movies other than the same type as well as a movie which cannot be selected is displayed distorted. Further, the maximum number of movies which can be selected is set as five files. Also, in the case of three or more movies have been selected andonemovie is deleted, the remainingmovies shift up in sequence. For example, if the 2^{nd} movie is deleted, the 3^{rd} movie moves up to the 2^{nd} movie in sequence, etc.

If the "DETERMINE" button is operated, the playback screen as shown in FIG. 16C is displayed (Step S92). Next, the operation judges whether or not the "PLAYBACK" button has been operated (Step S94). If the "PLAYBACK" button has been operated, the movies added to the selection list are replayed continuously in the sequence selected (Step S96). Afterwards, the operation reverts to Step S92 and repeats the above-mentioned processing.

Meanwhile, in the playback screen, the operation judges whether or not the "SALVE" has been operated (Step S98). If the "SAVE" button has been operated, the operation decodes every frame of the movie data from the starting point position to the ending point position (Step S100) and then compression encoding is performed again and the file header is adjusted (Step S102). Furthermore, the operation saves the file as a new combined movie (StepS104) After save completion, as shown in FIG. 16D mentioned above, a directory listing showing the movies saved is displayed.

In combined movies, the operation is capable of combining the associated audio data and text data recorded in each movie. Also, as for the text data after the 5^{th} movie, even though the movie playback is replayable, the 5^{th} or subsequent movies are cancelled at editing time. Further, if the movie contains Global Positioning System (GPS) information, the GPS information of the 1^{st} selected movie is validated.

### (Transmission processing - FIG. 17)

Next, the operation which attaches and transmits E-mail messages with movies created by the above-mentioned processing will be explained. FIG. 17 is a flowchart for explanation of the E-mail transmission operation. From Step S68 of FIG. 6, the operation judges whether or not the "E-MAIL" button has been operated (Step S110). If the "E-MAIL" button is selected, the operation saves the movie as an attachment file (Step S112). Also, the user's usual E-mail preparation screen is shown (Step S114) and progresses to create the new E-mail.

In this manner, the embodiment confronts attachment of a movie file to an E-mail message. Since editing consisting of resizing, clipping and combining of movie files acquired randomly can be performed and as a result create movie files which are attachable, the user at the time of E-mail preparation no longer has to distinguish whether or not the size, capacity, etc. of the movie file(s) can be attached to an E-mail. Thus, the convenience related to transmission of E-mail messages with attached files is enhanced.

### <Second embodiment>

Even though in the first embodiment above whereby movie files recorded with the camera cellular phone undergo resizing for attaching to E-mails, clipping from a random position and combining process of multiple movies are described in detail, the second embodiment is characterized by adding an opening movie, an ending movie and scene changes (with transitional effects) movie so that an unnatural impression is not presented at the time of movie file playback during the switching of movies combined with the combination processing, as well as at the beginning and ending of a clipped movie file playback.

In addition, the configuration performs the same processing as the first embodiment mentioned above using identical reference numbers and explanation is omitted from the description. However, in contrast to the movie files based on movies recorded with the camera cellular phone 1 or movie files downloaded via a network, in order to achieve the second embodiment, the image processing section 131 generates a plurality of frames (about 15-30 frames) according to the transitional effect(s) based on predetermined frames of the original movie file. Thus, the image effect changes the display images gradually between two movies or the opening and ending. Also, processing which creates one movie file in which the transitional effect is ultimately combined with the original movie and generates a transition movie by encoding these frames (recoding).

### (Explanation of the processing details)

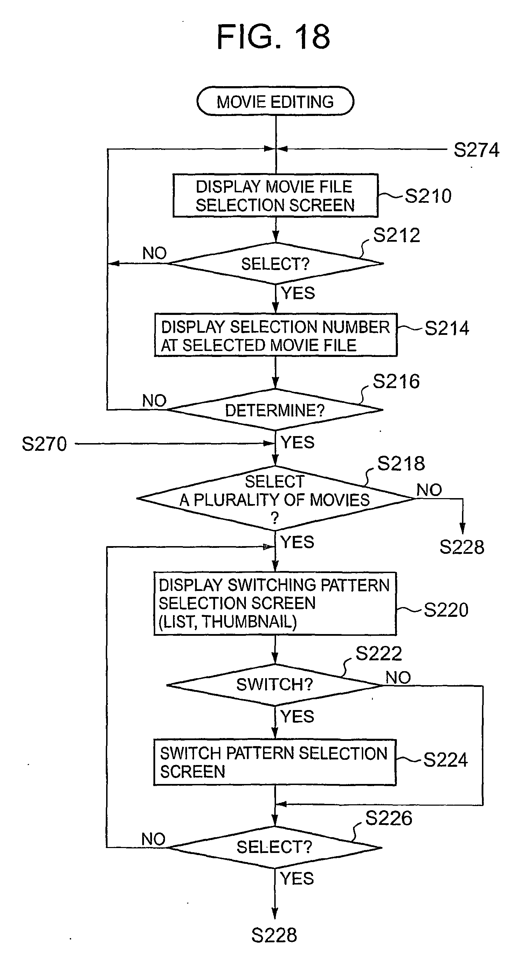

Next, the operation of the embodiment mentioned above will be explained. Referring to FIGs. 18 through 22 are flowcharts for explanation of the movie editing operation in the camera cellular phone 1 according to the second embodiment.

### (Movie file selection process - FIG. 18)

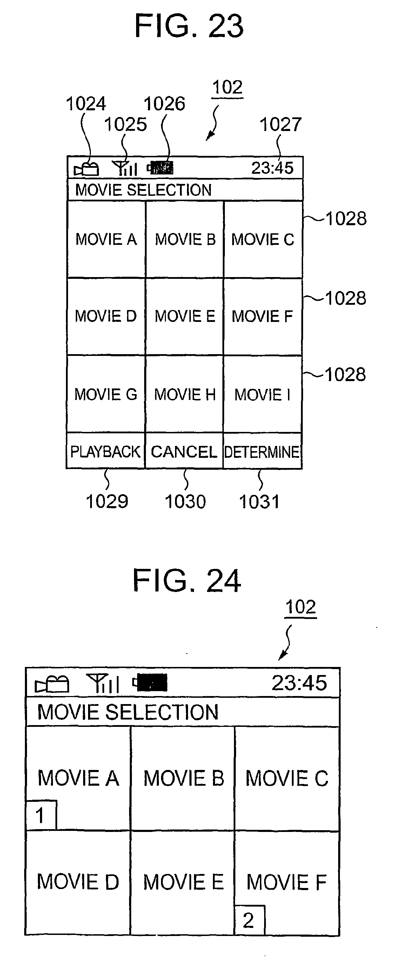

In the camera cellular phone 1 when movie editing is selected, as shown in FIG. 23, the file information of the movie stored in the other work memory 1244 is read and then the movie file selection screen is generated from the file information and shown on the main display 102 (Step S210).

FIG. 23 shows the display mode of the main display 102 in this case. The icon 1024 indicates the mode currently selected is the movie mode. The icon 1025 indicates the radio wave reception state. The icon 1026 indicates battery power. The current time 1027 is always displayed. The top frames of the thumbnails 1028 represent a maximum of nine movie files saved in the other work memory 1244 of the RAM 124 in a multi-display. At the bottom portion, the "PLAYBACK" instruction area 1029 (corresponding to the operation detection of the camera key 104), the "CANCEL" display area 1030 (corresponding to the operation detection of the determination key 107) and the "DETERMINE" display area 1031 (corresponding to the operation detection of the address key 108) are shown.

Moreover, in the movie files shown in the thumbnails 1028, there are movie files recorded by oneself and downloaded via the network of the Internet, etc. A user operates the cross key 106 to select a movie file to perform movie editing (transitional effects) from the selection screen and operates the address key 108 to determine the movie file.

By detecting the user's selection option, the operation judges whether or not a movie file to be used as the object for editing has been selected from the movie file selection screen (Step S212). When the movie file is selected, as shown in FIG. 24, the selection number is displayed on the corresponding thumbnail (Step S214). The number of movie files which can be selected is one or two. After selecting a movie file, the user operates the address key 108 again to perform the determination operation.

In the selection screen, the operation judges whether or not the determination operation is performed and follows the determination operation of the user (Step S216). After a movie file is selected, the determination operation judges whether or not a plurality of movies are been selected (Step S218). If one movie is selected, the operation advances to message input after Step S228. Meanwhile, if two movies are selected, the operation advances to the following switching pattern selection screen.

### (Switching pattern selection - FIG. 18)

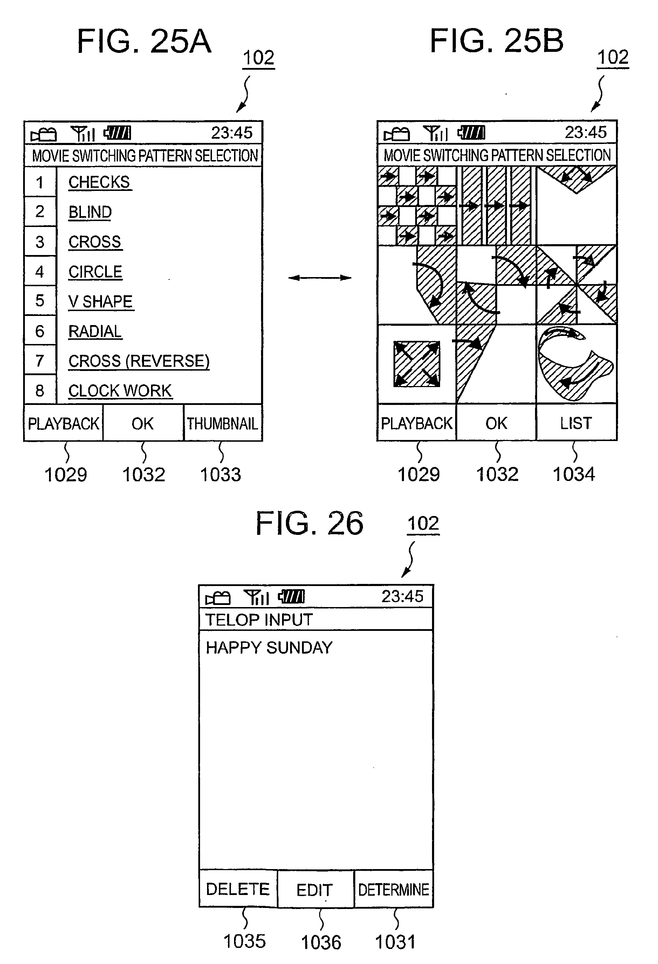

In the movie switching pattern selection, the switching pattern selection screen (listing, thumbnails) as shown in FIGs. 25A or 25B is displayed (Step S220. Referring to the switching pattern selection screen (listing) in FIG. 25A, in the instance of continuous playback of two movie files a list of switching patterns for use at the time of switching movie files in playback is displayed. The "OK" display area 1032 (corresponding to the operation detection of the determination key 107) and the "THUMBNAIL" display instruction area 1033 (corresponding to the operation detection of the address key 108) are shown which substitute for the "CANCEL" display area 1030 and the "DETERMINE" display area 1031.

Moreover, in the switching pattern selection screen (thumbnails) shown in FIG. 25B, the thumbnails of the switching patterns for use at the time of switching two movie files in playback is displayed. The "OK" display area 1032 (corresponding to the operation detection of the determination key 107) and the "LIST" display instruction area 1034 (corresponding to the operation detection of the address key 108) are shown which substitute for the "CANCEL" display area 1030 and the "DETERMINE" display area 1031.

Also, in the diagram examples, 1 - CHECKS, 2 - BLIND, 3 - CROSS, 4 - CIRCLE, 5 - V SHAPE, 6 - RADIAL, 7 - CROSS (REVERSE), and 8 - CLOCK WORK are arranged as the switching patterns (transitional effects). Here, the selected switching pattern generates a movie which shifts to the top frame of the 2^{nd} movie file according to the switching pattern selected from the last frame of the 1^{st} movie file based on the last frame from of the 1^{st} movie file and the top frame of the 2^{nd} movie file.

Next, in the switching pattern selection screen, the operation judges whether or not a switching operation is detected by operation of the address key 108 (Step S222). If a switching operation is executed, the selection screen is switched between the switching pattern selection screen (listing) in FIG. 25A and the switching pattern screen (thumbnails) in FIG. 25B (Step S224). Next, in the switching pattern selection screens (listing, thumbnails), the operation judges whether or not a switching pattern is selected (Step S226). If not selected the operation the operation reverts to Step S220. If a switching pattern is selected, the operation advances to message input after Step S228.

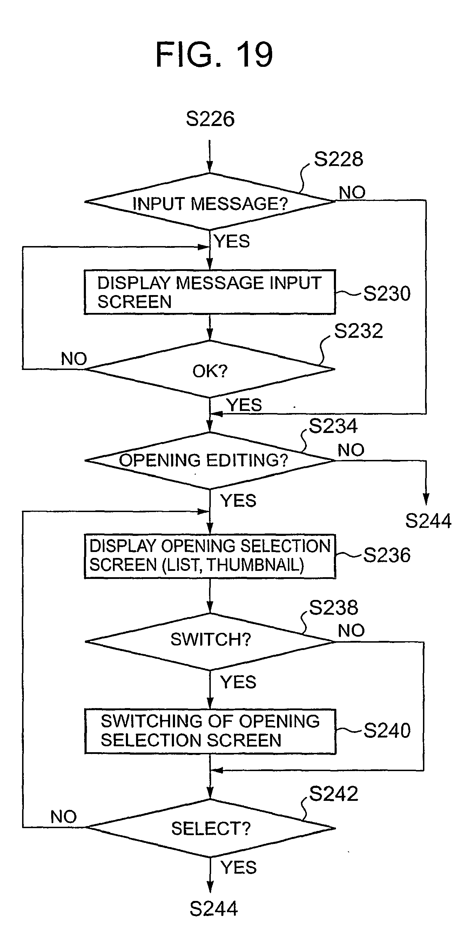

### (Message input - FIG. 19)

Next, in the camera cellular phone 1, the operation judges whether or not a message input is performed by the operation detection of the ten-keypad 113 (Step S228). If a message input is not selected, the operation advances to the opening edit segment described later. Meanwhile, if a user operates the ten-keypad 113 and message input is selected, the message input screen shown in FIG. 26 will be displayed (Step S230). At the message input screen, a message to indicate a TELOP INPUT (telephone operator comment) simultaneously with the movie playback can be inputted. Next, after inputting a message by the user, the operation judges whether or not a "DETERMINE" operation is detected by operation of the address key 108 (Step S232). If a "DETERMINE" operation is performed, the operation advances to the next opening edit segment.

### (Opening edit - FIG. 19)

When the operation advances to opening edit, first the operation judges whether or not opening edit is effected (Step S234). Opening edit is processing which creates a transition movie with appended transitional effects using the top frame of the selected original movie file and can be selected randomly. If the user does not select opening edit, the operation advances to the ending edit described later after Step S244.

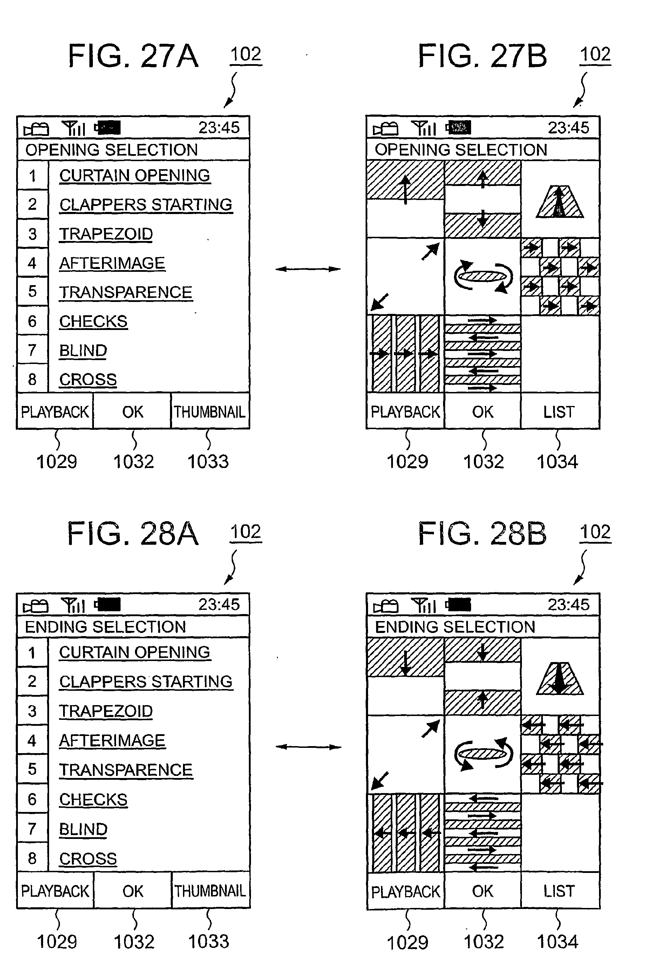

Meanwhile, if the user selects opening edit, the opening selection screen (listing or thumbnails) as shown in FIG. 27A or FIG. 27B is displayed (Step S236). In the opening selection screen (listing) shown in FIG. 27A, a list of transitional patterns for use at the time of opening in the instance of movie playback is displayed. Also, in the opening selection screen (thumbnail) shown in FIG. 27B, thumbnails of opening transitional patterns are displayed. In the example diagrams, 1 - CURTAIN OPENING, 2 - CLAPPERS STARTING, 3 - TRAPEZOID, 4 - AFTERIMAGE, 5 - TRANSPARENCE, 6 - CHECKS, 7 - BLIND and 8 - CROSS are arranged as opening transitional patterns.

Next, in the opening selection screen, the operation judges whether or not the switching operation is performed by detecting operation of the address key 108 (Step S238). If the switching operation is performed, the selection screen is switched between the opening selection screen (listing) shown in FIG. 27A and the opening selection screen (thumbnails) shown in FIG. 27B (Step S240). Next, in the opening selection screens (listing, thumbnails), the operation judges whether or not the transitional effects is selected (Step S242). If not selected, the operation reverts to Step S236 and repeats the opening selection mentioned above. Meanwhile, if a transitional effect is selected, the operation advances to the ending edit after Step S244.

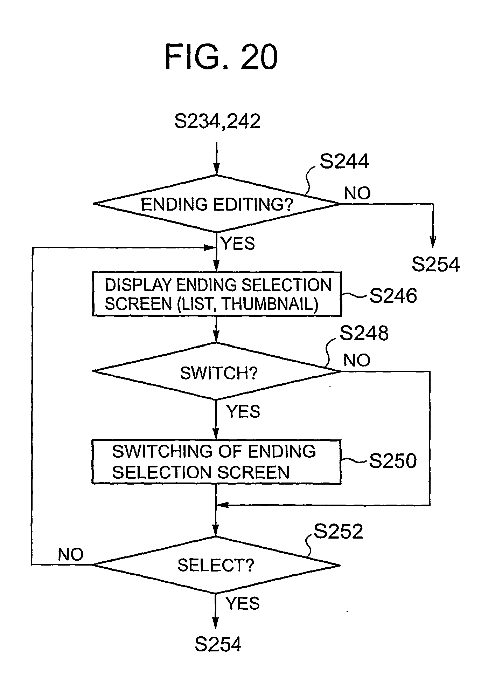

### (Ending edit - FIG. 20)

When the operation advances to ending edit, first the operation judges whether or not ending edit is effected (Step S244). The ending edit is processing which creates a transition movie with appended transitional effects using the last frame of the selected original move file like the opening edit mentioned above and can be selected randomly. If the user does not select ending edit, the operation advances to the playback processing described later.

Meanwhile, if a user selects ending edit, the ending selection screen (listing, thumbnails) shown in FIG. 28A or FIG. 28B is displayed (Step S246). In the ending selection screen (listing) shown in FIG. 28A, a list of transitional patterns for use at the time of ending in the instance of movie playback is displayed. Also, in the ending selection screen (thumbnails) shown in FIG. 28B, thumbnails of opening transitional patterns are displayed. In the example diagrams, 1- CURTAIN OPENING, 2 - CLAPPERS STARTING, 3 - TRAPEZOID, 4 - AFTERIMAGE, 5 - TRANSPARENCE, 6 - CHECKS, 7 - BLIND and 8 - CROSS are arranged as ending transitional patterns.

Next, in the ending selection screen, the operation judges whether or not the switching operation is performed by detecting operation of the address key 108 (Step S248). If the switching operation is performed, the selection screen is switched between the ending selection screen (listing) shown in FIG. 28A and the ending selection screen (thumbnails) shown in FIG. 28B (Step S250). Next, in the ending selection screens (listing, thumbnails), the operation judges whether or not the transitional effects is selected (Step S252). If not selected, the operation reverts to Step S246 and repeats the ending selection mentioned above. Meanwhile, if a transitional effect is selected, the operation advances to the ending edit after Step S254.

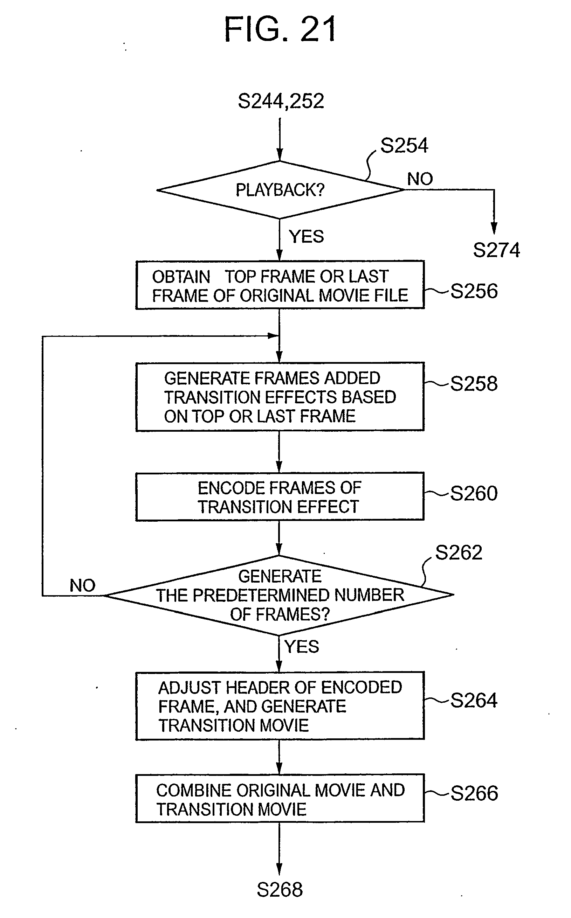

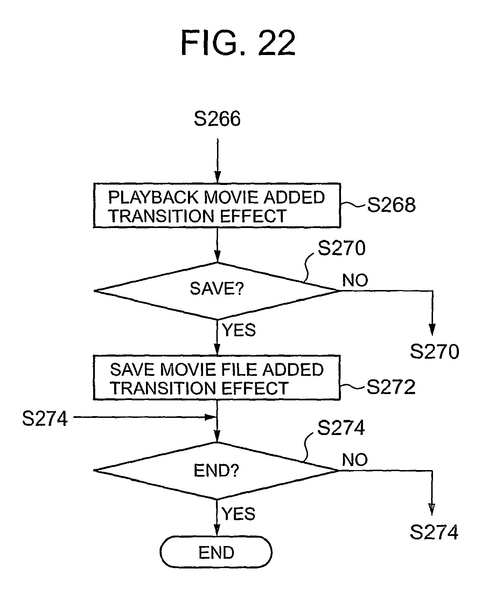

### (Playback processing - FIGs. 21 and 22)

When the operation advances to playback processing, first the operation judges whether or not playback is effected (Step S254). If playback is not directed, the operation advances to Step S274 of FIG. 22. Meanwhile, if playback is directed the operation acquires the top frame or the last frame of the original move file (Step S256). Specifically, if one movie file is selected and a transitional effect for the opening is selected, the top frame of the movie file is acquired. Conversely, if the transitional effect for the ending is selected, the last frame of the movie file is acquired. Moreover, if two movies are selected and the transitional effect for the opening is selected, the top frame of the 1^{st} movie is acquired. Conversely, if the transitional effect for the ending is selected, the last frame of the 2^{nd} movie file is acquired. Furthermore, if a switching pattern is selected, the operation acquires the last frame of the 1^{st} movie file and the top frame of the 2^{nd} movie file.

Next, the frames appended to the transitional effects in the opening, ending or the switching portion are generated based on the top frame or the last frame (Step S258), and the frames which are appended as transitional effects are encoded (Step S260).

Next, the operation judges whether or not only the predetermined frame numbers are generated (Step S262). At this stage, the number of frames generated is about 5∼9 frames. Hereinafter, Steps S254∼S262 are repeated and executed until the predetermined number of frames (about 15∼30 frames) are generated. Additionally, when the frames which are appended as the transitional effect(s) of only the predetermined number of frames are created, the header of the encoded frames is adjusted and a transition movie is generated (Step S264), and then the original movie and the transition movie will be combined (Step S266). Also, the operation advances to playback processing and encoding processing (recoding, file saved) after Step S268.

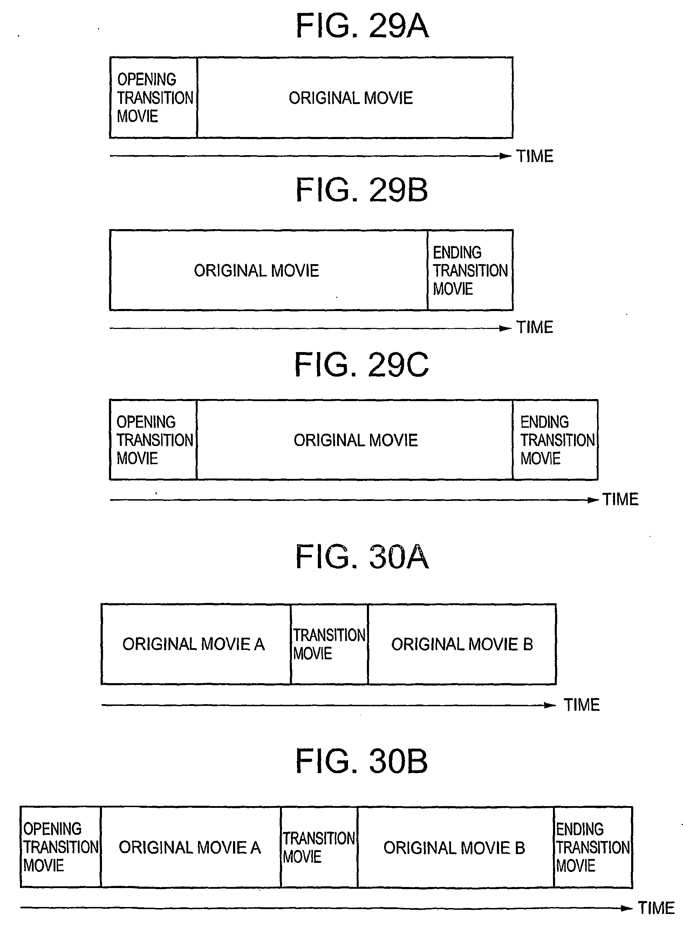

FIGs. 29A, 29B and 29C are conceptual diagrams showing the status of transitional effects appended to the opening, ending or to both sides of one movie file. If a transitional effect is appended to the opening of an original movie file, the movie is as shown in FIG. 29A. If a transitional effect is appended to the ending, the movie is as shown in FIG. 29B. If a transitional effect is appended to both sides, the movie is as shown in FIG. 29C.

Furthermore, FIGs. 30A and 30B are conceptual diagrams showing the status of transitional effects appended to the switching portion and further the status of the transitional effects appended to the opening and ending relative to two movies. If a transitional effect is appended to the switching portion of two original movie files A and B, the movie is as shown in FIG. 30A. Furthermore, if a transitional effect is appended to the opening and ending, the movie is as shown in FIG. 30B.

Next, the movie file with the appended transitional effect (s) is played back (Step S268). Subsequently, the operation judges whether or not a save (file created) is directed by the user (Step S270). If a save is not directed, the operation advances to Step S218 shown in FIG. 18 and resumes from selection of a transitional effect. Meanwhile, if a save is directed, the movie with the appended transitional effect(s) mentioned-above is finalized and saved to the other work memory 1244 of the RAM 124 (Step S272). Also, the operation judges whether or not "end" is directed (Step S274). If end is not directed, the operation returns to Step S210 shown in FIG. 18 and resumes the movie file selection process. Meanwhile, if "end" is directed, the move edit concerned will be terminated.

Additionally, in the embodiment mentioned above, movie files with the appended transitional effect(s) can be saved to an external recording medium which can be attached and detached (not illustrated).

### <Third embodiment>

In the second embodiment above, the processing which creates random transition movies illustrated in the cases of the opening movie, the ending movie and scene changes of movie files recorded with the camera cellular phone 1 was explained. In the third embodiment, the processing extracts frames (top frames) which are actually combined and reproduced among a plurality of frames (top frames) of the above-mentioned movie files created randomly will be explained.

Additionally, the configuration performs the same processing as the first and second embodiments mentioned above using identical reference numbers and explanation is omitted from the description. However, operations are added to the second embodiment in order to achieve the third embodiment which enables the user to verify the transition movie and faster playback by extracting several frames (about 9 frames) from a transition movie that are displayed as thumbnails. With the thumbnails displayed, the advantages of shortening the amount of time to playback a transition movie and saving memory space are achieved.

### (Explanation of the processing details)

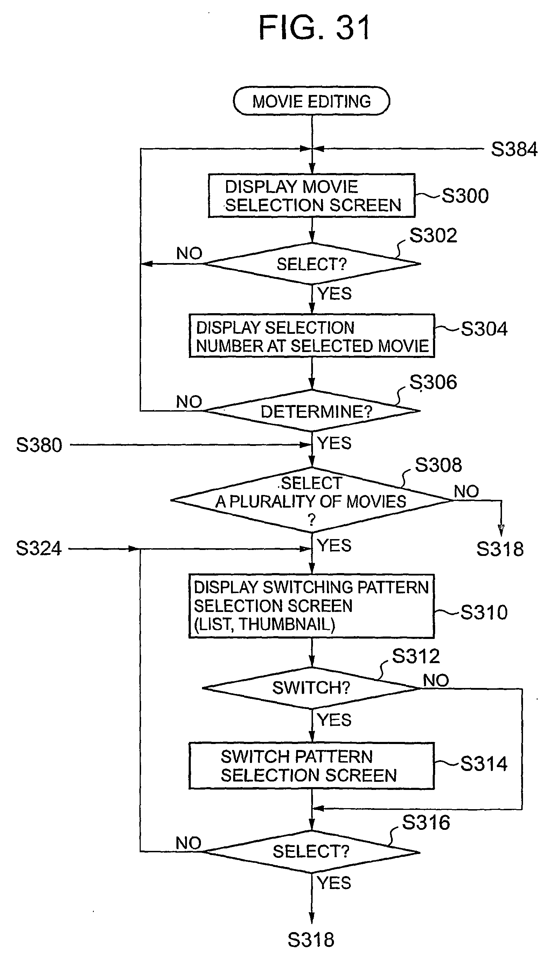

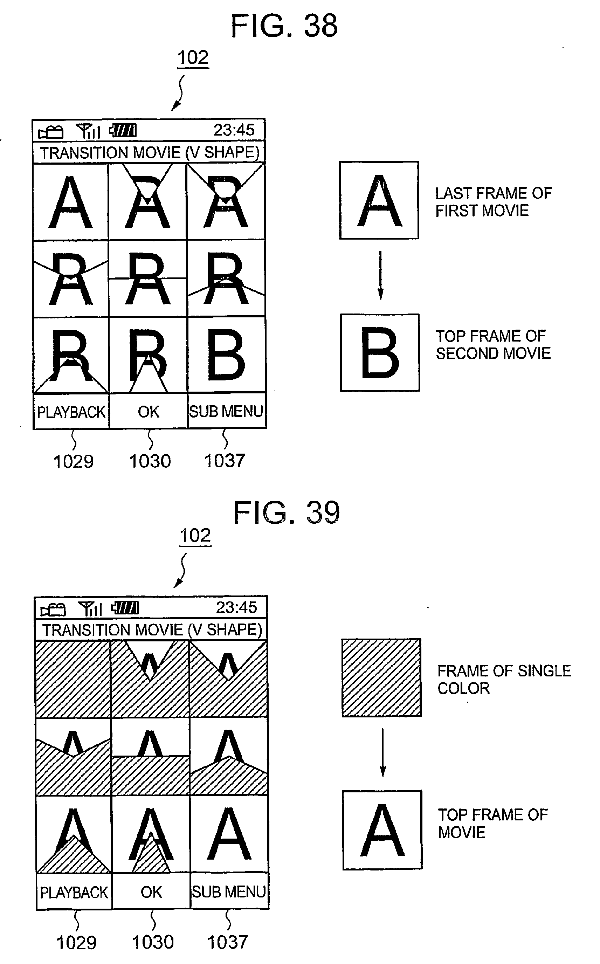

Next, the operation of the embodiment mentioned above will be explained. Here, the display examples are equivalent to the second embodiment mentioned above and will be explained using some diagram references of the second embodiment. FIGs. 31 to 37 are flowcharts for explanation of the movie editing operation in the camera cellular phone 1 according to the third embodiment. Moreover, FIGs. 38 to 40 are mimetic diagrams showing examples of the camera cellular phone 1 display at the time of the movie edit according to the embodiment.

### (Movie selection)

In the camera cellular phone 1 when movie edit is selected, first as shown in FIG. 23 the file information of the movie file stored in other work memory 1244 is read and the movie selection screen generated from the file information is shown on the main display 102 (Step S300). From the display state of FIG. 23, the control section 122 of the camera cellular phone 1 judges whether or not the movie file to be used as the editing object from the movie file selection screen is selected by detecting the user's selection operation (Step S302). Also, selection of a movie file reflects the selection number on the corresponding thumbnail as shown in FIG. 24 (Step S304). The number of the movie files which can be selected is one or two. After the selecting a movie file, the user operates the address key 108 again and performs a determination operation.

In the movie file selection screen, the operation judges whether or not a "DETERMINE" operation by the user is performed (Step S306). After a movie file is selected and when a "DETERMINE" operation is performed, the operation judges whether or not a plurality of movie files are selected (Step S308). If one movie file is selected, the operation advances to message input described later. Meanwhile, if two movie files are selected, the operation advances to the next switching pattern selection.

### (Switching pattern selection - FIG. 31)

In the switching pattern selection, the switching pattern selection screen (listing, thumbnails) as shown in FIGs 25A or FIG. 25B is displayed (Step S310). Also, in such a switching pattern selection screen, the operation judges whether or not a switching operation is performed (Step S312). If a switching operation is performed, the selection screen is switched between the switching pattern selection screen (listing) in FIG. 25A and the switching pattern screen (thumbnails) in FIG. 25B (Step S314). Next, in the switching pattern selection screens (listing, thumbnails), the operation judges whether or not a switching pattern is selected (Step S316). If not selected the operation the operation reverts to Step S310 and repeats the switching pattern selection mentioned above. Meanwhile, when a switching pattern is selected, the operation advances to the transition movie preview.

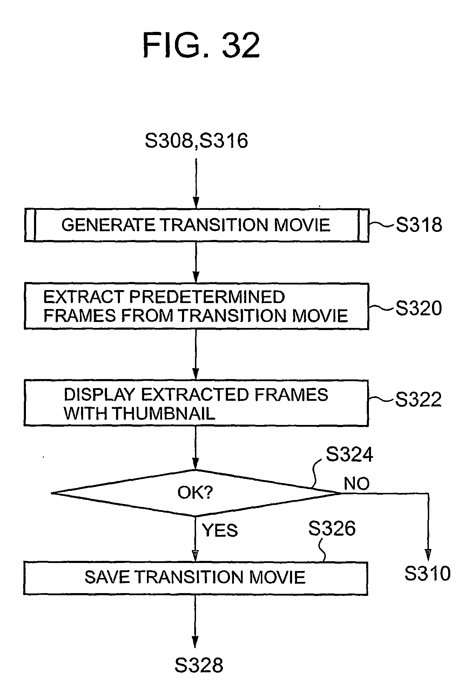

### (Switching transition movie preview - FIG. 32)

Next, the control section 122 of the camera cellular phone 1 follows the switching pattern selected by the user in the switching pattern selection menu. The operation generates a transition movie which switches from the last frame of the 1^{st} movie file and shifts to the top to the top frame of the 2^{nd} movie file according to the pattern based on the last frame of the 1^{st} movie file and the top frame of the 2^{nd} movie file (Step S318).

### (Transition movie generation - FIG. 32)

Next, the transition movie generation process will be explained.

First, predetermined frames are extracted from the generated transition movie file (Step S320). In this embodiment, a movie file of about 15∼30 frames representing 2∼3 seconds is generated and 9 frames are extracted so that the transition movie can be thinned out. Next, a thumbnail is generated from the extracted frames and arranged 3 x 3 as shown in FIG. 38 (Step S322). The example shown in FIG. 38 represents the instance where the "V SHAPE" is selected as the switching pattern. As illustrated, the switching transition movie preview is understandable as the operation switches from the top frame (A) of the 1^{st} movie file, the image effect changes gradually according to the pattern (V character) and then the indicator shifts to the last frame (B) of the 2^{nd} movie file.

In this manner, by showing thumbnails of the frames extracted from the transition movie file side by side on one screen, the acquired type of transition effect can be understood easily by the user. Also, by displaying the transition movie using 9 top frames shortens the amount of time to playback a transition movie and memory space can also be saved.

Next, the operation judges whether or not there is any indication of "OK" by the operation detection of the determination key 107 by the user (Step S324). If the user verifies the thumbnail of the transition movie and does not direct "OK", the operation reverts to Step S320 and the switching pattern is selected again. Meanwhile, if the user directs "OK" the above-mentioned transition movie file is saved in the other work memory 1244 of the RAM 124 (Step S326) and advances to processing of the next message input.

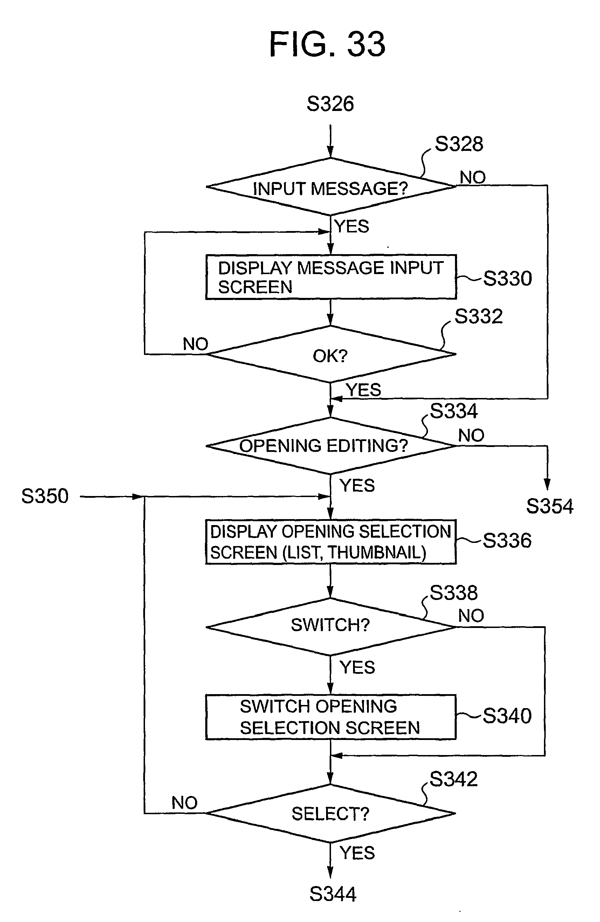

### (Message input - FIG. 33)

In the camera cellular phone 1, the operation judges whether or not a message input is performed by operation detection of the ten-keypad 113 (Step S328). If a message input is not selected, the operation advances to the opening edit described later. Meanwhile, when a user operates the ten-keypad 113 and selects message input, the message input screen shown in FIG. 26 is displayed (Step S330). At the message input screen, a message to indicate a TELOP INPUT (telephone operator comment) simultaneously with the movie playback can be inputted. Next, after inputting a message by the user, the operation judges whether or not a "DETERMINE" operation is detected by operation of the address key 108 (Step S332). If an "OK" operation is performed, the operation advances to the next opening edit segment.

### (Opening Edit - FIG. 33)

When the operation advances to opening edit, first the operation judges whether or not opening edit is effected (Step S334). Opening edit is processing which creates a transition movie with appended transitional effects using the top frame of the selected original movie file and can be selected randomly. If the user does not select opening edit, the operation advances to the ending edit.

Meanwhile, if the user selects opening edit, the opening selection screen (listing or thumbnails) as shown in FIG. 27A or FIG. 27B is displayed (Step S336). Next, in the opening selection screen, the operation judges whether or not the switching operation is performed (Step S338). If the switching operation is performed, the selection screen is switched between the opening selection screen (listing) shown in FIG. 27A and the opening selection screen (thumbnails) shown in FIG. 27B (Step S340). Next, in the opening selection screens (listing, thumbnails), the operation judges whether or not the transitional effects is selected (Step S342). If not selected, the operation reverts to Step S336 and repeats the opening selection mentioned above. Meanwhile, if a transitional effect is selected, the operation advances to the transition movie preview.

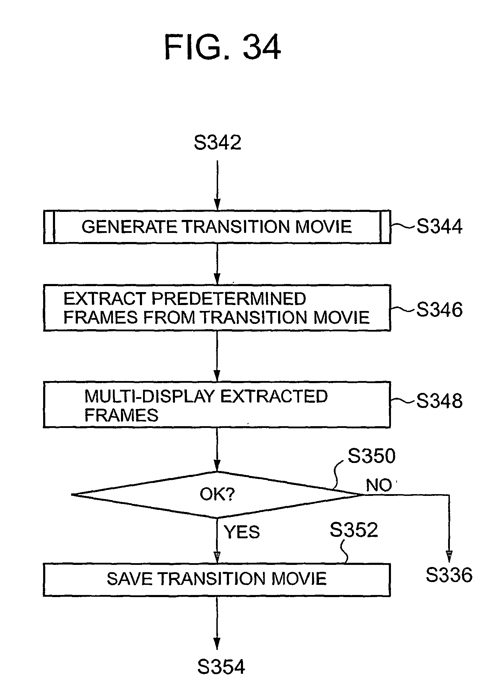

### (Opening transition movie preview - FIG. 34)

Next, the control section 122 of the camera cellular phone follows the transition pattern selected by the user in the opening selection. Consequently, based on the top frame of the selected original movie file, the image effect changes gradually from the default screen (a predetermined single color screen or a selected color screen) according to the transition pattern and the opening transition movie file which shifts to the top frame of the original movie file is generated (Step S344).

Next, predetermined frames are extracted from the generated opening transition movie file (Step S346). Here, as mentioned above, nine frames are extracted so that the opening transition movie can be thinned out. Next, thumbnails are generated from the extracted frames and arranged 3 x 3 as shown in FIG. 39 (Step S348). As illustrated, by opening transition movie preview according to the transition pattern (V character), the image effect which changes gradually from the default screen (diagonal lines in FIG. 39) and then the indicator shifts to the top frame (A) of the original movie is obtained.

Next, the operation judges whether or not there is any indication of "OK" by the user (Step S350). If the user verifies the thumbnail of the transition movie and does not direct "OK", the operation reverts to Step S336 and the opening selection is performed again. Meanwhile, if the user directs "OK" the above-mentioned transition movie file is saved in the other work memory 1244 of the RAM 124 (Step S352) and next advances to ending edit.

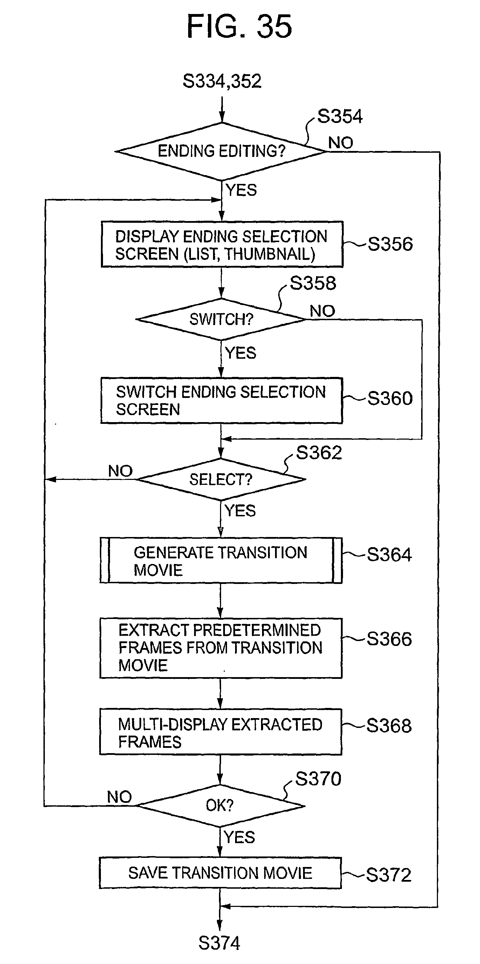

### (Ending edit - FIG. 35)

When the operation advances to ending edit, first the operation judges whether or not ending edit is effected (Step S354). The ending edit is processing which creates a transition movie with appended transitional effects using the last frame of the selected original move file like the opening edit mentioned above. If the user does not select ending edit, the operation advances to the playback processing described later.

Meanwhile, if a user selects ending edit, the ending selection, screen (listing, thumbnails) shown in FIG. 28A or FIG. 28B is displayed (Step 356). Next, in the ending selection screen, the operation judges whether or not the switching operation is performed (Step S358). If the switching operation is performed, the selection screen is switched between the ending selection screen (listing) shown in FIG. 28A and the ending selection screen (thumbnails) shown in FIG. 28B (Step S360). Next, in the ending selection screens (listing, thumbnails), the operation judges whether or not the transitional effects is selected (Step S362). If not selected, the operation reverts to Step S356 and repeats the ending selection mentioned above. Meanwhile, if a transitional effect is selected, the operation advances to the next ending transition movie preview.

### (Ending transition movie preview - FIG. 35)

Next, the camera cellular phone follows the transition pattern selected by the user in the opening selection. Consequently, based on the last frame of the selected original movie file, the image effect switches gradually from the last frame according to the transition pattern and the ending transition movie file which shifts to the default screen (a predetermined single color screen or a selected color screen) is generated (Step S364). Generation of the transition movie file will be explained later.

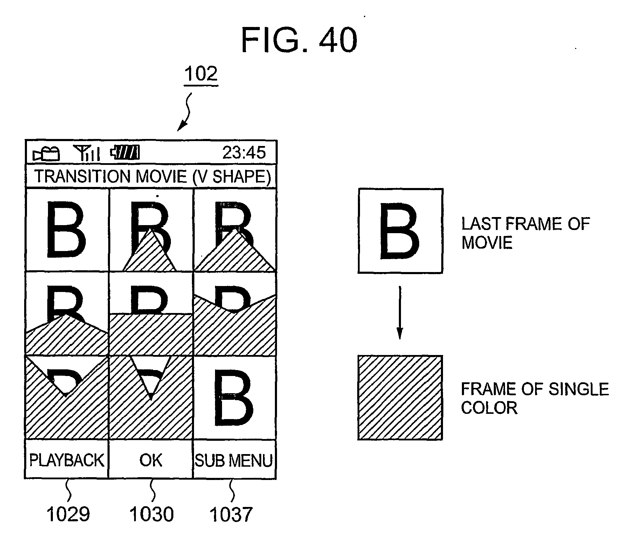

Specifically, predetermined frames are extracted from the generated opening transition movie file (Step S366). Here, as mentioned above, nine frames are extracted so that the opening transition movie can be thinned out. Next, thumbnails are generated from the extracted frames and arranged 3 x 3 as shown in FIG. 40 (Step S368). As illustrated, by ending transition movie preview according to the transition pattern (V character), the image effect which changes gradually from the top frame (B) of the original movie file and then the indicator shifts to the default screen (diagonal lines) is obtained.

Next, the operation judges whether or not there is any indication of "OK" by the user (Step S370). If the user verifies the thumbnail of the ending transition movie and does not direct "OK" , the operation reverts to Step S356 and the ending selection is performed again. Meanwhile, if the user directs "OK" the above-mentioned ending transition movie file is saved in the other work memory 1244. of the RAM 124 (Step S372).

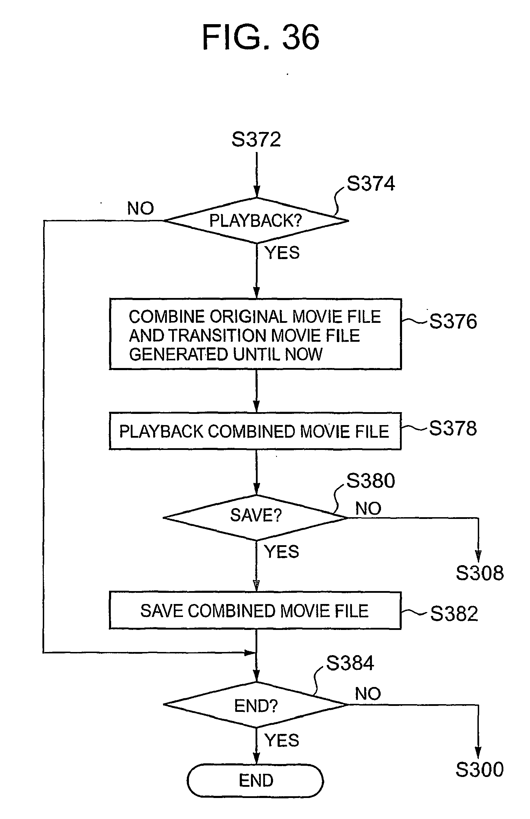

### (Playback processing - FIG. 36)

When the operation advances to playback processing, first the operation judges whether or not playback is effected (Step S374). An indication of playback will combine the original movie file and the transition movie file(s) (a switching transition movie, an opening transition movie, an ending transition movie) generated up to this time (Step S376). Next, the combined movie file is played back (Step S378). Subsequently, the operation judges whether or not a save (file created) is directed by the user (Step S380). If a save is not directed, the operation advances to Step S308 shown in FIG. 31 and resumes from selection of a transitional effect. Meanwhile, if a save is directed, the movie which is combined with the transitional effect(s) mentioned-above is saved to the other work memory 1244 of the RAM 124 (Step S382). Also, the operation judges whether or not "end" is directed (Step S384). If end is not directed, the operation returns to Step S300 shown in FIG. 31 and resumes the movie file selection process. Meanwhile, if "end" is directed, the move edit concerned will be terminated.

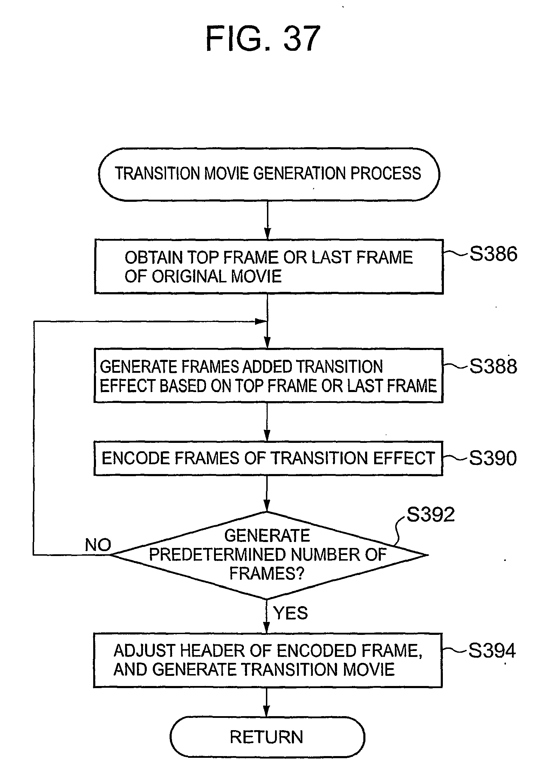

### (Transition movie generation- FIG. 37)

Next, the transition movie file generation process mentioned above will be explained. First, the top frame or the last frame of an original movie file is acquired (Step S386). Specifically, if one movie file is selected and a transitional effect for the opening is selected, the top frame of the movie file is acquired. Conversely, if the transitional effect for the ending is selected, the last frame of the movie file is acquired. Moreover, if two movies are selected and the transitional effect for the opening is selected, the top frame of the 1^{st} movie is acquired. Conversely, if the transitional effect for the ending is selected, the last frame of the 2^{nd} movie file is acquired. Furthermore, if a switching pattern is selected, the operation acquires the last frame of the 1^{st} movie file and the top frame of the 2^{nd} movie file.

Next, the frames appended to the transitional effects in the opening, ending or the switching portion are generated based on the top frame or the last frame (Step S388), and the frames which are appended as transitional effects are encoded (Step S390). Next, the operation judges whether or not only the predetermined frame numbers are generated (Step S392) At this stage, the number of frames generated is about 15∼30 frames. Hereinafter, Steps S388~S392 are repeated and executed until the predetermined number of frames (about 15~30 frames) are generated. Additionally, when the frames which are appended as the transitional effect(s) of only the predetermined number of frames are created, the header of the encoded frames is adjusted and recoding (encoding) of the generated transition movie file is performed (Step S394). Then, the operation reverts to creating processing.

Additionally, in the embodiment mentioned above, movie files with the appended transitional effect(s) can be saved to an external recording medium which can be attached and detached (not illustrated). Also, movie files with appended transitional effects can be attached and transmitted in E-mail messages.

Furthermore, in this embodiment even though nine frames are extracted the generated transition movie file, at the time these nine frames are being extracted into a multi-display the user's selection operation is detected, and the operation can be made to employ several random frames as the transition frames.

Additionally, although a cellular phone with a camera (movie pick-up function) is described in the embodiment mentioned above, the present invention is also applicable to digital video cameras (digital cameras comprising a movie pick-up function using Motion JPEG) comprising a semiconductor storage medium, Personal Digital Assistants (PDA's) comprising a movie pick-up function or various electronic equipment which can receive and record broadcast media.

### <Fourth embodiment>

In the second and third embodiments above, the processing which creates random transition movies illustrated in the cases of the opening movie, the ending movie and scene changes of movie files recorded with the camera cellular phone 1 was explained. In the fourth embodiment, the processing which makes the opening movie, the ending movie and the transition movie shown in the case of scene changes integrate as backgrounds (background scenes) will be explained.

The configuration performs the same processing as the first, second and third embodiments mentioned above using identical reference numbers and explanation is omitted from the description. In order to achieve the fourth embodiment, the image processing section 131 can select an image recorded or downloaded as well as an image partly clipped as a background image at the time of generating a transition movie file. As a result, at the time of opening, a transitional effect can be added which shifts gradually to the top frame of an original movie file from a background image.

Moreover, it is possible at the time of ending to add a transitional effect which shifts gradually to the background image from the last frame of an original movie file. If a background image is not selected, the predetermined default image (a single color frame image; color can be selected) is used in its place. Also, a title (characters) can be inputted into the background image of the opening, ending or both of these in the embodiment.

### (Explanation of the processing details)

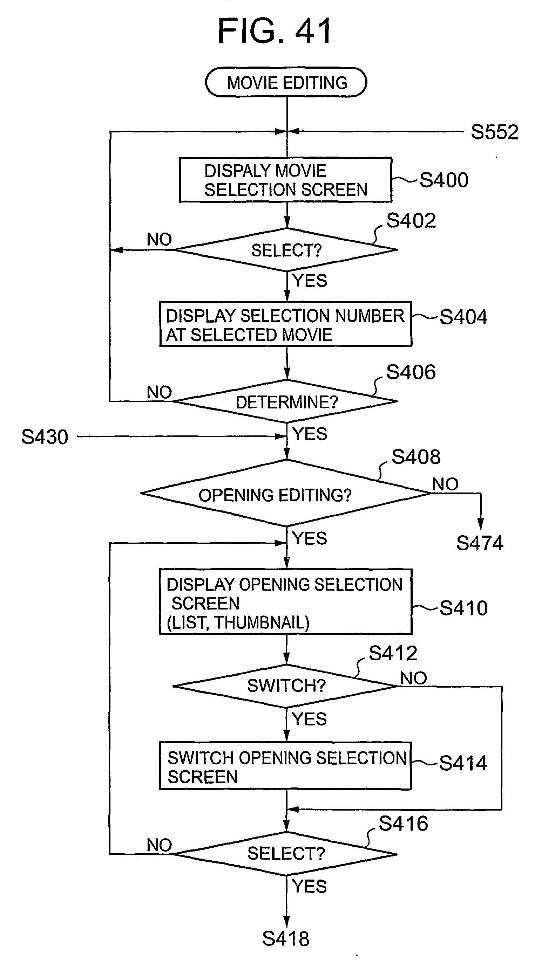

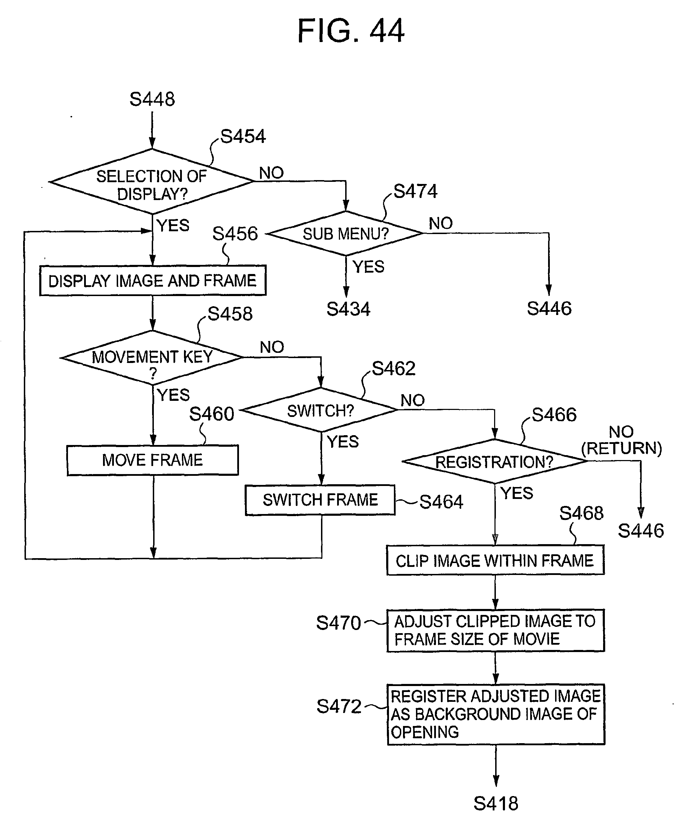

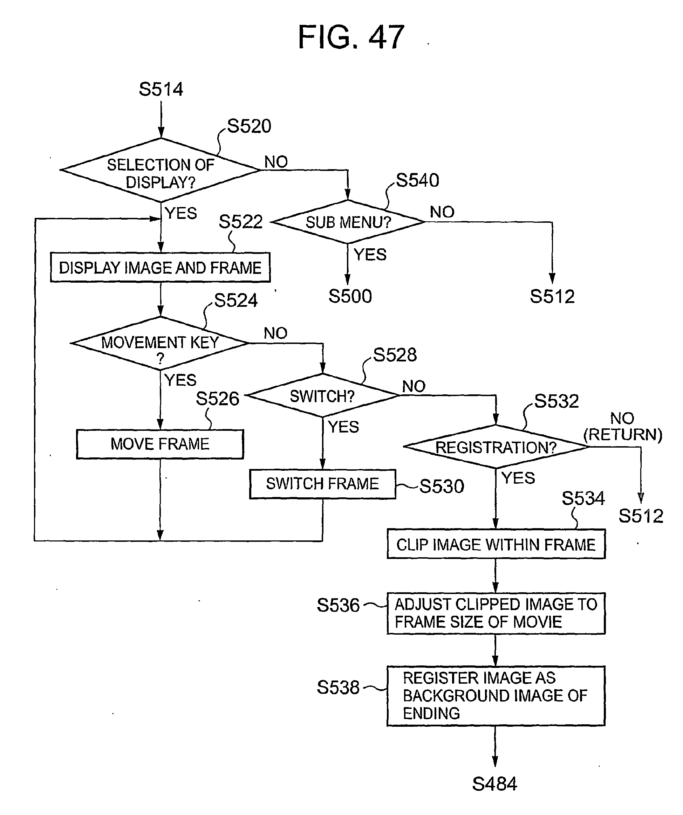

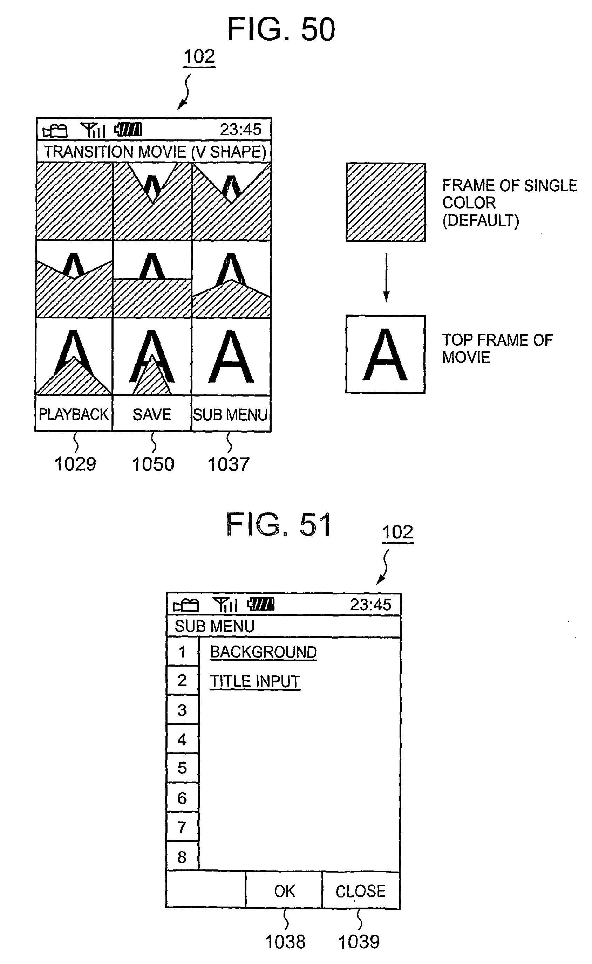

Next, operation of the embodiment mentioned above will be explained. Here, the display examples are equivalent to the second and third embodiments mentioned above and will be explained using some diagram references of the second and third embodiments. FIG. 41 through FIG. 49 are flowcharts for explanation of the movie editing operation in the camera cellular phone 1 according to the fourth embodiment. FIG. 50 through FIG. 56 are mimetic diagrams showing display examples of the camera cellular phone 1 at the time of movie editing according the fourth embodiment.

### (Movie selection - FIG. 41)

In the camera cellular phone 1, when the movie editing is selected as shown in FIG. 23, first the file information of the movie file stored in the other work memory 1244 will be read and the movie file selection screen generated from the file information is displayed on the main display 102 (Step S400). From the display state of FIG. 23, the control section 122 of the camera cellular phone 1 judges whether or not the movie file used as the object for editing from the movie file selection screen is selected by detecting the user's selection operation (Step S402). If any movie file is selected, the selection number is displayed on the corresponding thumbnail as shown in FIG. 24 (Step S404). At least one or more movie files can be selected. After the selecting a movie file, the user operates the address key 108 again and performs determination operation.

In the movie selection screen, the operation judges whether or not a "DETERMINE" operation by the user is performed (Step S406). After amovie is selected and when a "DETERMINE" operation is performed, the operation selected as opening edit, ending edit or movie playback is executed. Actually, the predetermined menu panel is displayed and can be made to perform above-mentioned opening edit, ending edit or movie playback.

### (Opening edit - FIG. 41)

First, the operation judges whether or not opening edit is effected (Step S408). If the user does not select opening edit, the operation advances to ending edit described later.

Meanwhile, if the user selects opening edit, the opening selection screen (listing, thumbnails) as shown in FIG. 25A or FIG. 25B is displayed (Step S410). In the opening selection screen, the operation judges whether or not the switching operation is performed (Step S412). If the switching operation is performed, the selection screen is switched between the opening selection screen (listing) shown in FIG. 25A and the opening selection screen (thumbnails) shown in FIG. 25B (Step S414). Next, in the opening selection screens (listing, thumbnails), the operation judges whether or not transitional effects is selected (Step S416). If not selected, the operation reverts to Step S410 and repeats the opening selection mentioned above. Meanwhile, if a transitional effect is selected, the operation advances to the opening transition movie preview.

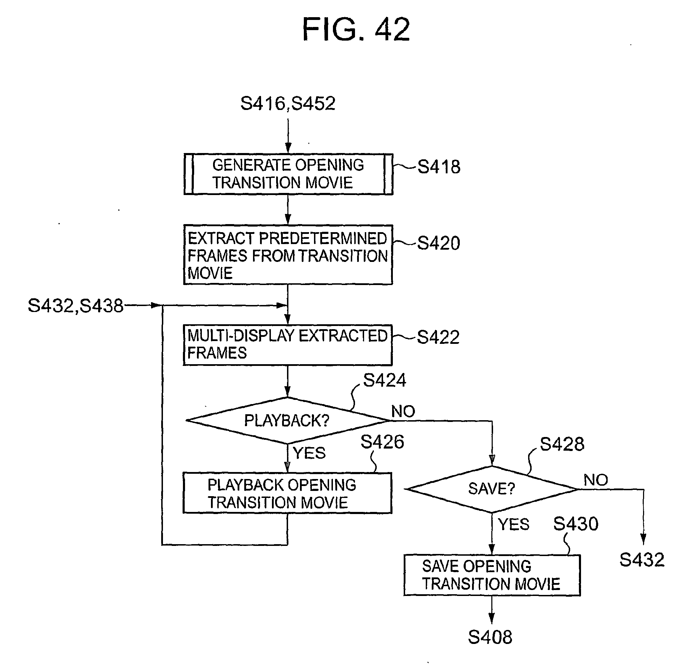

### (Opening transition movie preview - FIG. 42)

Next, according to the transition pattern selected by the user in the opening selection, based on the top frame of the selected original movie file, the image effect changes gradually from the opening default screen (predetermined single color screen) according to the transition pattern and the opening transition movie file which shifts to the top frame of the original movie file is generated in the camera cellular phone 1 (Step S418). The details of the transition movie generation will be described later. Also, static images recorded by oneself, the Internet, etc. can be achieved besides the single color screen as the opening default screen. The setup of the opening default screen will be described later.

Next, the predetermined frames are extracted from the generated opening transition movie file (Step S420). In this embodiment, an opening transition movie of about 15∼30 frames representing 2∼3 seconds is generated and 9 frames are extracted so that the opening transition movie can be thinned out. Next, a thumbnail is generated from the extracted frames and arranged in a multi-display of 3 x 3 (Step S422).

At the bottom of this screen, the "PLAYBACK" instruction area 1029 (corresponding to the operation detection of the camera key 104), the "SAVE" indication area 1050 (corresponding to the operation detection of the determination key 107) and the "SUB MENU" display instruction area 1037 (corresponding to the operation detection of the address key 108) are shown. The example shown in FIG. 50 represents the instance where the "V SHAPE" is selected as the switching pattern. As illustrated, by opening transition movie preview according to the transition pattern (V character), the image effect gradually changes from the opening default screen (diagonal lines) and then the indicator shifts to the top frame (A) of the original movie file is obtained.

In this manner, by showing thumbnails of the frames extracted from the opening transition movie side by side on one screen, the user can easily understand the type of transitional effect is acquired. Also, by displaying the opening transition movie using 9 top frames shortens the amount of time to playback a transition movie and memory space can also be saved.

### (Opening transition movie playback processing - FIG. 42)

Next, the operation judges whether or not there is any "PLAYBACK" indication (Step S424). If there is an indication, the operation will playback the opening transition movie (Step S426). After playback ends, the operation reverts to Step S422 and reverts to the multi-display screen shown in FIG. 50. Meanwhile, if "PLAYBACK" is not directed, the operation judges whether or not "SAVE" is directed. If directed, the above-mentioned opening transition movie is saved to the other work memory 1244 of RAM 124 (Step S430).

If neither "PLAYBACK" nor "SAVE" is directed, the operation judges whether or not the "SUB MENU" is directed (Step S432). If the "SUB MENU" is not directed, the operation reverts to Step S422 of FIG. 42 and reverts to the multi-display shown in FIG. 50. Meanwhile, if the "SUB MENU" is directed, the "SUB MENU" shown in FIG. 51 is displayed (Step S434).

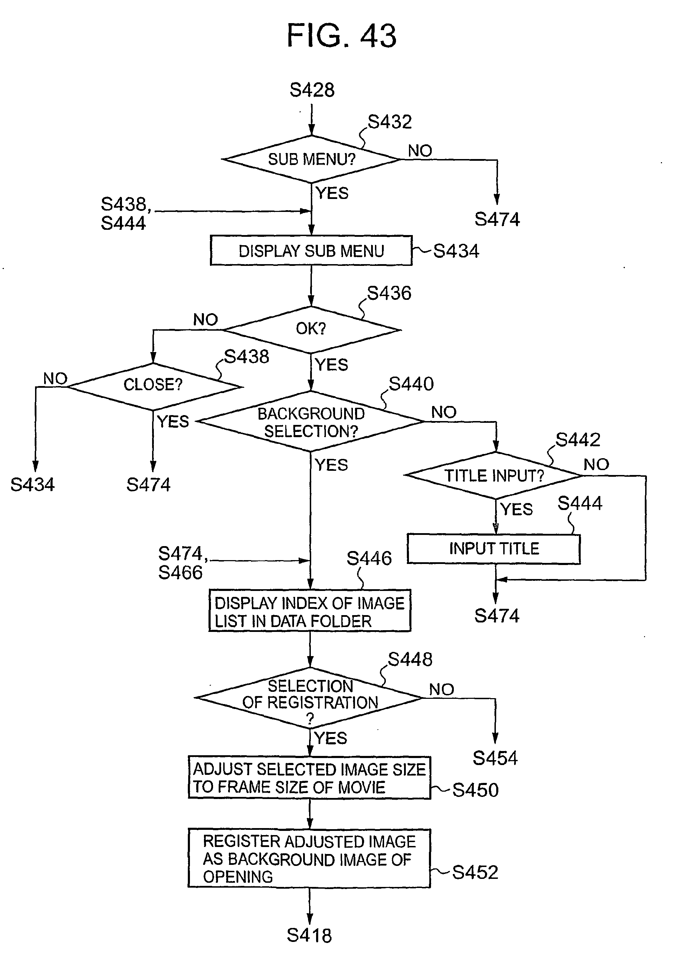

### (Background image selection, integration and registration processing - FIGs. 43-44)

In the "SUB MENU", the title "BACKGROUND" for selecting a background image which is the default screen and "TITLE INPUT" for inputting a title in the default screen are provided. Also, at the bottom of this screen in FIG. 51, the "OK" indication area 1038 (corresponding to the operation detection of the determination key 107) for selection and finalizing and the "CLOSE" indication area 1039 (corresponding to the operation detection of the address key 108) for closing the "SUB MENU" screen are displayed.

First, the operation judges whether or not there is any indication of "OK" by the operation detection of the determination key 107 by the user (Step S436). If "OK" is not directed, the operation judges whether or not the operation detection of the address key 108 is directed even though closed (Step S438). If "OK" and "CLOSE" are not directed, the operation reverts to Step S434 and continues display of the "SUB MENU." Meanwhile, if "CLOSE" is directed, the operation returns to Step S422 and reverts to the multi-display of the transition movie shown in FIG. 50 and repeats the processing mentioned above.

Meanwhile, if "OK" is directed with the "SUB MENU", the operation judges whether or not the "BACKGROUND" is selected (Step S440). Although "OK" is directed with the "SUB MENU, if "BACKGROUND" is not selected, next the operation judges whether or not the "TITLE INPUT" is directed (Step 5442). Also,' wherein **"**TITLE INPUT" is selected, if "OK" is directed, the title input which should be shown on the start screen of the opening is performed (Step S444). In **"**TITLE INPUT, " the message input screen is displayed as shown in FIG. 26 and a message to indicate a TELOP INPUT (telephone operator comment) simultaneously with the movie playback can be inputted. Next, after inputting a message by the user, the operation judges whether or not a "DETERMINE" operation is detected by operation of the address key 108. Afterwards, the operation reverts to Step S434 and continues display of the "SUB MENU."

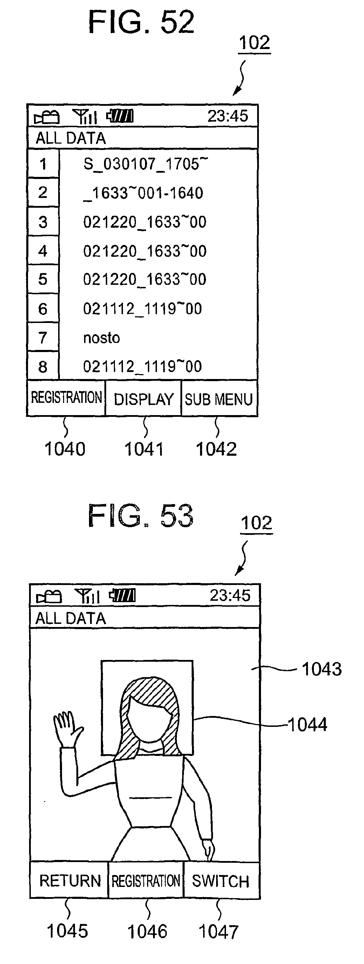

Meanwhile, in the "SUB MENU", wherein "BACKGROUND" is selected, an indication of "OK" will display the image list index of images stored previously in the other work memory 1244 (data folder images) as shown in FIG. 52 (Step S446). A list of images recorded by oneself and downloaded images are shown on this screen. At the bottom of the screen, the "REGISTRATION" indication area 1040 (corresponding to the operation detection of the camera key 104) for registering static images selected from the list as an opening background image, the "DISPLAY" instruction area 1041 (corresponding to the operation detection of the determination key 107) for showing the selected static images (preview) and the "SUB MENU" display instruction area 1042 (corresponding to the operation detection of the address key 108) for returning to the "SUB MENU" are shown.

Next, when the image registered as the opening background image is selected, the operation judges whether or not "REGISTRATION" is directed (Step S448). Wherein one of the images is selected from the list as the opening background image, when "REGISTRATION" is directed, the image is resized (enlarged/reduced) in order to set the selected image to the frame size of an original move (Step S450) and be registered as a background (background scene) image (Step S452). Therefore, the entire image selected in this case will be registered as the opening background image. Then, the operation returns to Step S418 of FIG. 42. Hereafter, as mentioned above, according to the transition pattern the image effect changes from the selected image gradually again and the opening transition move which shifts to the top frame of the original movie file is generated (Step S418), the predetermined frames are multi-displayed (Step S422), playback (Step S426), a save (Step S430), etc. are performed.

Meanwhile, in the data folder image list index display screen shown in FIG. 52, if "REGISTRATION" is not directed, wherein the image register as the opening background image is selected, the operation judges whether or not "DISPLAY" is directed (Step S454). If neither "REGISTRATION" nor "DISPLAY" are directed, the operation judges whether or not the "SUB MENU" is directed (Step S474). If the "SUB MENU" is directed, the operation reverts to the "SUB MENU" display of Step S434 and hereafter repeats the above-mentioned processing. Meanwhile, if neither "REGISTRATION" nor "DISPLAY" nor "SUB MENU" are directed, the operation returns to the data folder image list index display of Step S446 and hereafter repeats the above-mentioned processing.

In the data folder image list index display screen, wherein the image registered as the opening background image is selected, if "DISPLAY" is directed, as shown in FIG. 53, the selected image 1043 and the selected frame 1044 are displayed (Step S456). The selected frame 1044 shows the area cut off as an opening background (background scene) image. At the bottom of this screen, the "RETURN" indication area 1045 (corresponding to the operation detection of the camera key 104) for returning to the data folder image list index display screen, the "REGISTRATION" indication display area 1046 (corresponding to the operation detection of the determination key 107) for registering the clipped image of the selected frame 1044 as the opening background image and the "SWITCH" indication display area 1047 (corresponding to the operation detection of the address key 108) for switching the size of the selected frame 1044 are shown. Next, if the operation judges whether or not the move key (the cross key 106) is operated (Step 458) and if the move key is operated the selected frame 1044 is moved according to the operation (Step S460). Then, the operation reverts to Step S456 and repeats the above-mentioned processing.

Meanwhile, if the move key (cross key 106) is not operated on the screen shown in FIG. 53, the operation judges whether or not "SWITCH" is directed (Step S462). If "SWITCH" is directed, the size of the selected frame 1044 is switched (Step S464) and afterwards the operation reverts to Step S456 and repeats the above-mentioned processing. If neither the move key nor "SWITCH" is directed, the operation judges whether or not "REGISTRATION" is directed (Step S466). If registration is not directed either, the operation returns to Step S446, i.e., the data folder image list index display screen shown in FIG. 52 (If directed even though it returns).

A user designates the clipped area as the opening background image of opening with movement or switching the selected frame 1044 on the screen and instructs registration. When registration is instructed, the image in the selected frame 1044 is clipped (Step S468), and the clipped image is resized (enlarged/reduced) to adjust to the frame size of original movie (Step S470), and the resized image is registered as the background image (Step S472). Therefore, in this case, the partial image designated with the selected frame 1044 will be registered as the opening background image. Subsequently, the process reverts to Step S418 of FIG. 42. Hereafter, asmentionedabove, theopeningtransition movie which changes from selected image to the top frame of the original movie file, wherein the image effect changes gradually in accordance with the transition pattern, is generated again (Step S418), the predetermined frames are multi-displayed (Step S422), the playback (Step S426) and save (Step S430) are performed.

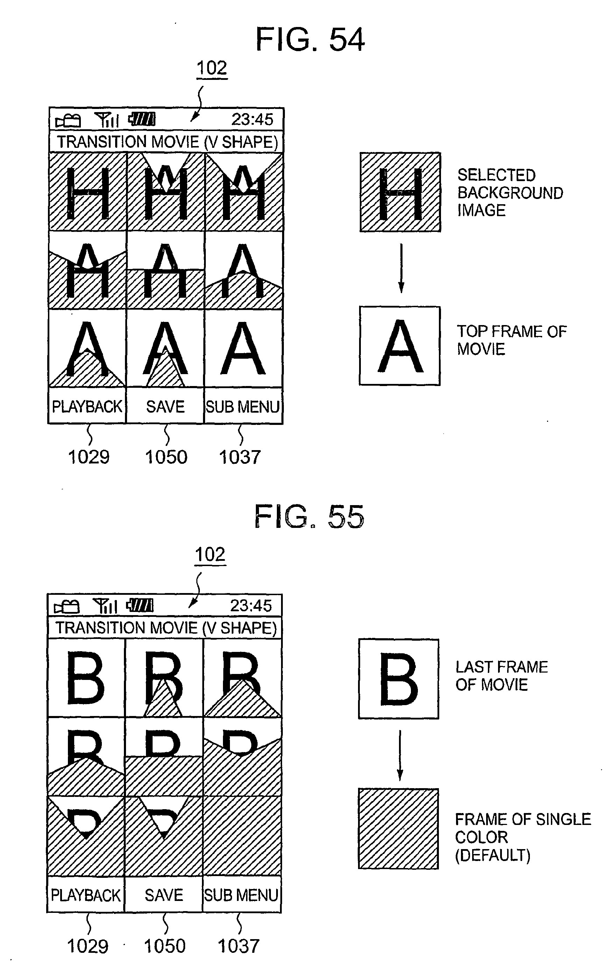

FIG. 54 shows an example of the multi-display of the opening transition movie in the state where the opening background image (H) is selected. As illustrated, in the multi-display screen of the opening transition movie, it is understood that the image effect changes gradually from the selected image (slash: H) according to the transition pattern (V SHAPE) and shifts to the top frame (A) of the original movie file.

When the user confirms the thumbnail of the opening transition movie finally and directs the save, the above-mentioned opening transition movie is then saved in the other work memory 1244 of RAM 124 (Step S430). Subsequently, the process reverts to Step S408 and reverts to the selection of opening edit.

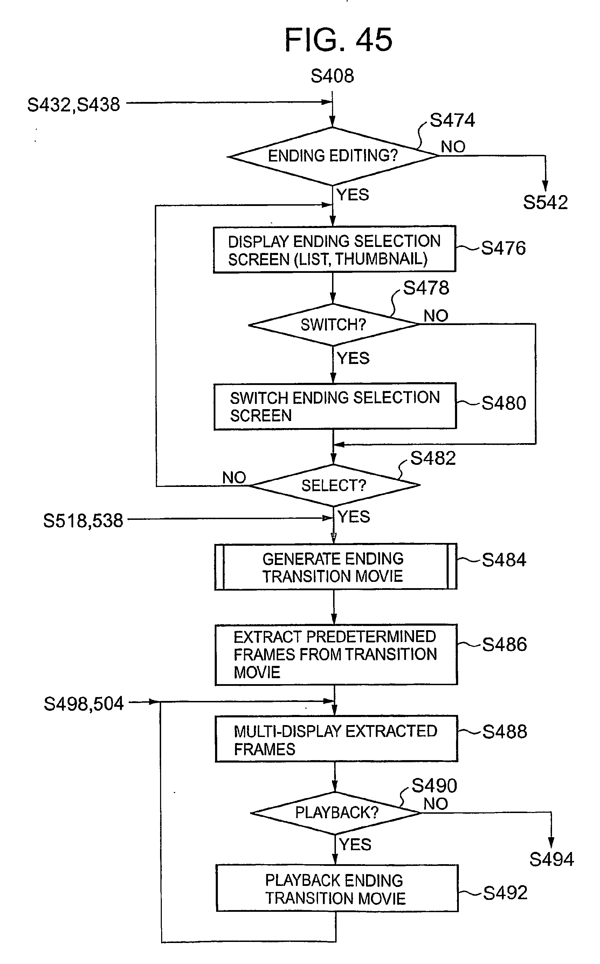

### (Ending edit - FIG. 45)

Next, in the selection of movie edit, when the above-mentioned opening edit is not selected (when the opening edit is not performed, or after the end of opening edit), the operation judges whether or not the ending edit is performed (Step S474). The ending edit is the processing which creates a transition movie added the transition effect using the last frame of the selected original movie file and can be selected randomly whether or not the ending edit is performed. When the user does not select the ending edit, the operation then advances to the playback processing mentioned later.

On the other hand, when the user selects the ending edit, the ending selection screen (listing or thumbnails) shown in FIG. 28A or 28B is displayed (Step S476).

Next, in the ending selection screen, the operation judges whether or not the switching operation is performed (Step S478). When the switching operation is performed, the selection screen is switched between the ending selection screen (listing) shown in Fig. 28A and the ending selection screen (thumbnails) shown in Fig. 28B (Step 5480). Next, in the ending selection screen (list or thumbnail), the operation judges whether or not the transition effect is selected (Step S482). When not selected the operation then reverts to Step S476 and repeats the above-mentioned ending selection. Meanwhile, if the transition effect is selected, the operation advances to the next ending transition movie preview.

### (Ending transition movie preview - FIG. 45)

Next, the camera cellular phone 1 generates the ending transition movie which changes from the last frame of the original movie file to the ending default image (predetermined single color image), where the image effect changes gradually in accordance with the transition pattern, based on the last frame of the selected original movie file in accordance with the transition pattern selected by the user in the ending selection (Step 5484). The generation of the transition movie file will be explained later. The detail of the transition movie generation will be explained later. Moreover, static images recorded by oneself or downloaded from the Internet, etc. can be set up other than the single color image as the ending default screen. The setup of this ending default screen will be explained later.

Next, the predetermined frames are extracted from the generated ending transition movie (Step S486). In this embodiment, the movie file of about 15-30 frames or for 2~3 seconds is generated as the ending transition movie and nine frames are extracted so that this ending transition movie may be thinned out. Next, thumbnails are generated from the extracted frames and arranged as 3x3 in a multi-display as shown in FIG. 55 (Step S488). As illustrated, in the ending transition movie preview, the user can recognize that the image effect changes gradually according to the selected transition pattern (V SHAPE) from the last frame (B) of the original movie file and shifts to the ending default image (slash).

In this way, the user can understand that what kind of transitional effect, is obtained easily by arranging and displaying the thumbnails of the frames extracted from the ending transition movie file on one screen. Moreover, it is passable to shorten time until thumbnails are displayed and save memory by displaying the ending transition movie with nine thumbnails.

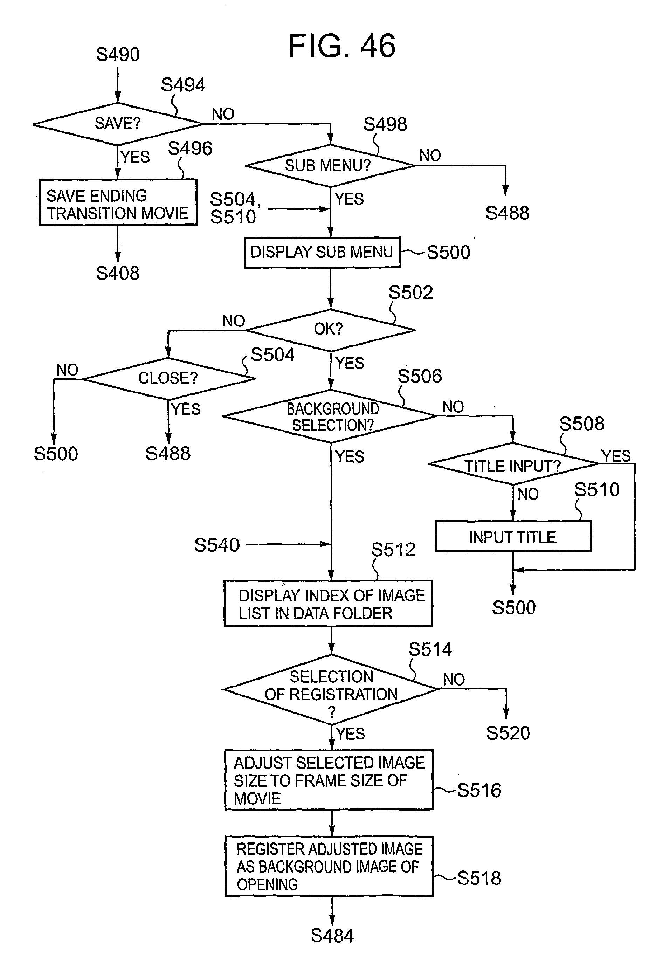

### (Playback processing - FIG. 46)

Next, the operation judges whether or not the playback operation is performed (Step S490). When the playback is instructed, the ending transition movie is then played back (Step S492). After the playback is completed, the operation reverts to Step S488, and reverts to the multi-display screen shown in FIG. 55. Meanwhile, when the playback is not instructed, the operation judges whether the storage is instructed by the user (StepS494). When the saving is instructed, the ending transition movie is saved in the other work memory 1244 of RAM 124 (Step S496). Subsequently, the process reverts to Step S408 and reverts to the selection of movie edit.

Moreover, when neither playback nor save is instructed, the operation judges whether or not the "SUB MENU" is instructed (Step S498). When the "SUB MENU" is not instructed, the operation reverts to Step S488 of FIG. 45 and reverts to the multi-display screen shown in FIG. 55. Meanwhile, when the "SUB MENU" is instructed, the "SUB MENU" shown in FIG. 51 is displayed as well as the opening edit (Step S500).

### (Background image selection, integration, registration processing - FIGs. 46-47)

First, the operation judges whether or not the instruction of "OK" is directed by the operation detection of the determination key 107 by the user (Step S502). When "OK" is not instructed, the operation then judges whether or not the closing by the operation detection of the address key 108 is instructed (Step S504). When "OK" and "CLOSE" are not instructed, the operation returns to Step S500 and continues the display of the "SUB MENU. " Meanwhile, when "CLOSE" is instructed, the operation reverts to Step S488 and reverts to the multi-display screen of the transition movie shown in FIG. 50 and repeats the above-mentioned processing.

Meanwhile, when "OK" is instructed, the operation then judges whether or not "BACKGROUND" is selected in the state of the display of FIG. 51 (step S506). When the "OK" is instructed, but the "BACKGROUND" is not selected, the operation then judges whether or not the "TITLE INPUT" is instructed (Step 5508). When the "OK" is instructed where the "TITLE INPUT" is selected, the title input to be displayed on the last screen of ending is carried out (Step S510). At the "TITLE INPUT" the message input screen shown in FIG. 26 is displayed and the message to indicate a TELOP INPUT (telephone operator comment) simultaneously with the movie playback can be inputted. Next, when the determination operation (the operation of the address key 108) is performed after the message is inputted by the user, after that, the process returns to Step S116 and continues the display of the "SUB MENU."

Meanwhile, in the "SUB MENU, when "OK" is instructed wherein the "BACKGROUND" is selected, the data folder image list index is displayed as shown in FIG. 52 as well as the opening edit (Step S512). Next, the operation judges whether or not the "REGISTRATION" is instructed where the image registered as the ending background image is selected from the list (Step S514). When the "REGISTRATION" is instructed where any image is selected from the list as the ending background image, the selected image is then resized (enlarged/reduced) to adjust to the frame size of the original movie (Step S516) and the resized image is registered as the background image (Step S518). Therefore, in this case, the selected entire image will be registered as the opening background image. Subsequently, the operation reverts to Step 5484 of FIG. 45. Hereafter, as mentioned above, the ending transition movie which changes from the last frame of the original movie file to the selected image, wherein the image effect changes gradually in accordance with the transition pattern is generated again (Step S484), the predetermined frames are multi-displayed (Step S488), the playback (Step S492) and save (Step S496) are performed.

Meanwhile, when the "REGISTRATION" is not instructed in the data folder image list index display screen shown in FIG. 52, the operation then judges whether or not the "DISPLAY" is instructed wherein the image registered as the ending background image is selected (Step S520). When neither "REGISTRATION"nor "DISPLAY" is instructed, the operation judges whether or not the "SUB MENU" is instructed (Step S540). When the "SUB MENU" is instructed, the operation reverts to the "SUB MENU" of Step S500 and hereafter repeats the above-mentioned processing. Meanwhile, when neither the "REGISTRATION" nor the "DISPLAY" nor the "SUB MENU" are instructed, the operation reverts to the data folder picture list index display of Step S512 and hereafter repeats the above-mentioned processing.

Moreover, in the data folder image list index display screen, when the "DISPLAY" is instructed where the image registered as the ending background image is selected, the selected image 1043 and the selected frame 1044 are displayed as shown in FIG. 53 as well as the opening edit (Step S522). The selected frame 1044 shows an area which is clipped as the ending background image. Next, the operation judges whether or not the move key (the cross key 106) is operated (Step S524). When the movie key is operated, the selected frame 1044 is moved according to the operation (Step S526). Subsequently, the operation reverts to Step S522 and repeats the above-mentioned processing.

Meanwhile, when the move key (the cross key 106) is not operated on the screen shown in FIG. 53, the operation judges whether or not the change is instructed (Step S528). When the change is instructed, the size of the selected frame 1044 is changed (Step S530), after that, the operation reverts to step S520 and repeats the above-mentioned processing. Moreover, when neither the move key nor the change is instructed, the operation then judges whether or not the "REGISTRATION" is instructed (Step S532). When the"REGISTRATION"is not instructed either (Namely, the return is instructed), the operation returns to Step S512, that is, the data folder image list index display screen shown in FIG. 52.

A user designates the clipped area as the opening background image with movement or switching the selected frame 1044 on the screen, and instructs registration. When the registration is instructed, the image in the selected frame 1044 is clipped (Step S534) and the clipped image is resized (enlarged/reduced) to adjust to the frame size of original movie (Step S536) and the resized image is registered as the background image (Step S538). Therefore, in this case, the partial image designated with the selected frame 1044 will be registered as the background image of ending. Subsequently, the operation reverts to Step S484 of FIG. 45. Hereafter, as mentioned above, the ending transition movie which changes from the last frame of the original movie file to the selected image, where the image effect changes gradually in accordance with the transition pattern, is generated again (Step S484), the predetermined frames are multi-displayed (Step S488), the playback (Step S492) and save (Step S496) are performed.

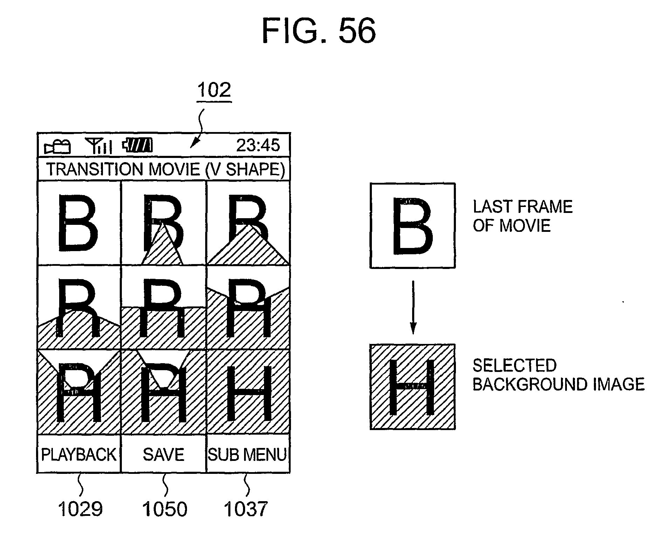

FIG. 56 shows the example of a multi-display of the ending transition movie in the state where the background image (H) of ending is selected. As illustrated, in the multi-display screen of the ending transition movie, it is understood that the image effect changes gradually from the last frame (B) of the original movie file according to the transition pattern (V SHAPE) and shifts to the selected image (slash: H).

When the user confirms the thumbnail of the ending transition movie finally and instructs save, the above-mentioned ending transition movie is then saved in the other work memory 1244 of RAM 124 (Step S496). Subsequently, the operation reverts to Step S408 and reverts to the selection of opening edit.

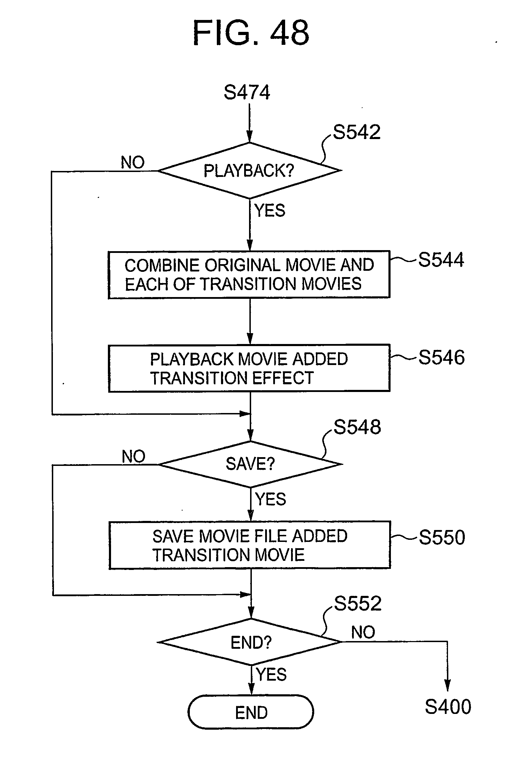

### (Playback processing - FIG. 48)

Next, in the selection of movie edit, when the above-mentioned opening edit is not selected (when the opening edit is not performed, or after the end of opening edit) or when the above-mentioned ending edit is not selected (when the ending edit is not performed or after the end of ending edit), the operation judges whether or not the playback is performed (Step S542). When the playback is not instructed, the operation advances to save described later. Meanwhile, when the playback is instructed the original movie file and the transition movie file generated until that time (the opening transition movie, the ending transition movie) are combined (Step S544).

Next, the combined movie file is played back (Step S546). Next, the operation judges whether or not save is instructed by the user (Step S548). When the saving is not instructed, the process then judges whether or not the ending is instructed (Step S552). When the ending is not instructed, the operation returns to Step S400 shown in FIG. 41 and reverts from the movie selection. Meanwhile, the ending is instructed and this movie edit is completed. Moreover, when the save is directed, the combined movie file mentioned above is saved to the other work memory 1244 of RAM 124 (Step 5550). The operation then judges whether or not the end is directed (Step S552). If end is directed, the process reverts to Step S400 shown in FIG. 41 and repeats from the movie selection. Meanwhile, when end is instructed, the movie edit concerned will be completed.

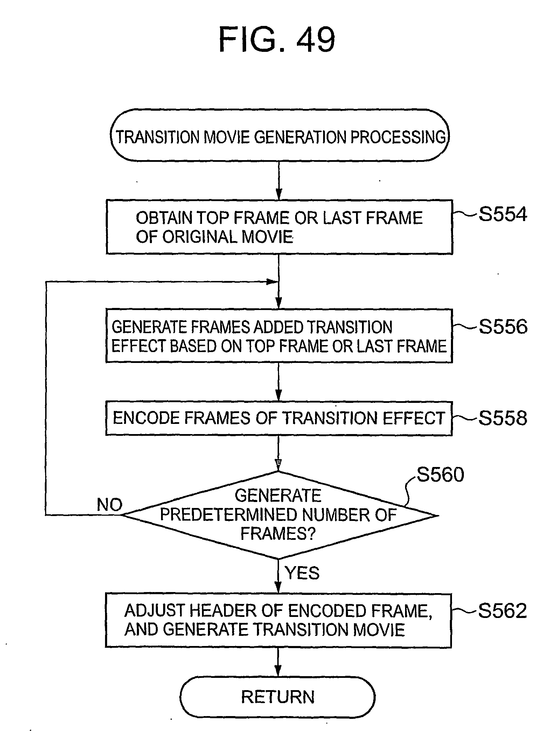

### (Transition movie generation - FIG. 49)

Next, the generation process of the transition movie file mentioned above will be explained. First, the top frame or last frame of the original movie file is obtained (Step S554). That is, when one movie file is selected and the transitional effect in the opening is selected the top frame of the movie file is then obtained, and when the transitional effect in the ending is selected the last frame of the movie file is obtained.

Next, the frames which are appended as the transitional effects in the opening or the ending are generated based on the top frame, the last frame or the selected image (the static image recorded by oneself or the static image obtained by downloaded from the Internet, etc.) (Step S556), and the frame added the transition effect is encoded (Step S558). Next, the operation judges whether or not the predetermined number of frames is generated (Step S560). At this stage, the generated frames may be about 15-30 frames. Hereafter, Steps 5556~5560 are repeated and performed until the predetermined number of frames (about 15-30 frames) are generated. When the frames which are appended as the transitional effect(s) of only the predetermined number of frames are generated, the header of the encoded frames is adjusted, and then the transition movie will be generated (S562). The operation then reverts to the predetermined processing.

In addition, in the embodiment mentioned above, movies with appended transitional effects may be saved to an external recording medium which can be attached and detached (not illustrated). Also, movie file with appended transitional effects may be transmitted as E-mail attachments and can be uploaded to a homepage, etc. Moreover, movie files with added transitional effects can be converted into flash movies.

While the present invention has been described with reference to the preferred embodiments, it is intended that the invention be not limited by any of the details of the description thereof.

As this invention can be embodied in several forms without departing from the essential characteristics thereof, the present embodiments are therefore illustrative and not restrictive, since the scope of the invention is defined by the appended claims rather than by the description preceding them.

## Claims

1. A wireless communication device applied to a mobile phone system, comprising:
an acquisition means (118, 129, 130) for acquiring a plurality of dynamic images;
a dynamic image storage means (1244) for storing a plurality of said dynamic images acquired by said acquisition means (118, 129, 130); and
a selection means (106, 107) for selecting at least one dynamic image of the plurality of dynamic images stored in said dynamic image storage means (1244) in accordance with a user input;
an editing means (131) for editing said dynamic images selected by said selection means (106,107);
a file conversion means (131) for converting said dynamic images edited by said editing means (131) to a file which permits transmission by said mobile phone system; and
a wireless transmission means (103,121,1221) for executing wireless transmission of said converted file attached to an electronic mail message,
**characterized by**
first image data creation means (122) for creating gradually changing dynamic image data based on either one of a top frame of the first dynamic image of the at least one dynamic image selected by the selection means or a last frame of the last dynamic image of the at least one dynamic image selected by the selection means;
a determination means (122) for determining the number of dynamic images selected by the selection means (106, 107);
second image data creation means (122) for, when the number of dynamic images selected by the selection means is determined to be greater than one, creating gradually changing dynamic image data based on a last frame and a top frame of two consecutively selected dynamic images, respectively;
a combination means (131) for combining the at least one dynamic image selected by the selection means and the gradually changing dynamic image data created by at least one of the first and the second image data creation means (122) into a new dynamic image;
wherein said file conversion means (131) converts said new dynamic image to a file that fits into a capacity which permits transmission by said mobile phone system.

2. The wireless communication device according to claim 1, further comprising:
an image extraction means (122, 131) for extracting static images from said dynamic images acquired by said acquisition means (118, 129, 130).

3. The wireless communication device according to claim 2, wherein said image extraction means (122, 131) is adapted for extracting a top frame image of said dynamic images acquired by said acquisition means (118, 129, 130).

4. The wireless communication device according to claim 2, wherein said image extraction means (122,131) is adapted for extracting a last frame image of said dynamic images acquired by said acquisition means (118, 129, 130).

5. The wireless communication device according to claim 2 to 4, further comprising:
a static image storage means (1244) for storing said each static image;
wherein said second dynamic image creation means is adapted for creating gradually changing dynamic images from said each static image stored in said static image storage means (1244) and said each static image extracted by said image extraction means (118, 129, 130).

6. The wireless communication device according to claim 2 to 5, further comprising:
a change pattern storage means (1252) for storing a plurality of patterns which change gradually and are created in said second dynamic image cremation means; and
a change pattern selection means (106,107) for selecting a specific change pattern from change patterns stored in said change pattern storage means (1252);
wherein said second dynamic image creation means is adapted for creating dynamic images which change gradually based on said specific change pattern selected by said change pattern selection means (106, 107).

7. The wireless communication device according to claim 1 to 6, wherein said acquisition means (118, 129, 130) comprises an imaging means (118, 130) for recording dynamic images.

8. The wireless communication device according to claim 1 to 6, wherein said acquisition means acquires said dynamic images from a network external of said device.

9. A dynamic image preparation method for processing image data in a wireless communication device applied to a mobile phone system, the method comprising the steps of:
acquiring (S10 - S22) a plurality of dynamic images;
storing a plurality of said acquired dynamic images; and
selecting at least one dynamic image of said plurality of stored dynamic images in accordance with a user input;
editing the at least one selected dynamic image;
converting (S272, S382, S550) the edited dynamic images to a file which permits transmission by said mobile phone system; and
wireless transmission (S110-S114) of said converted file attached to an electronic mail message,
**characterized by**
creating gradually changing dynamic image data based on either one of a top frame of the first dynamic image of the at least one selected dynamic image or a last frame of the last dynamic image of the at least one selected dynamic image;
determining the number of selected dynamic images;
creating, when the number of selected dynamic images is determined to be greater than one, gradually changing dynamic image data based on a last frame and a top frame of two consecutively selected dynamic images, respectively, of the at least one selected dynamic image;
combining the at least one selected dynamic image and the created gradually changing dynamic image data into a new dynamic image;
said converting step (S272, S382, S550) converts said new dynamic image to a file that fits into a capacity which permits transmission by said mobile phone system.

10. The dynamic image preparation method according to claim 9, further comprising:
an image extraction step (S256, S386, S554) for extracting static images from said dynamic images acquired by said acquiring step (S10-S22).

11. The dynamic image preparation method according to claim 10, wherein said image extraction step (S256, S386, S554) extracting a top frame image of said dynamic images acquired by said acquiring step (S10-S22).

12. The dynamic image preparation method according to claim 10, wherein said image extraction step (S256, S386, S554) extracting a last frame image of said dynamic images acquired by said acquiring step (S10-S22).

13. The dynamic image preparation method according to claim 10 to 12, having a static image storage memory for storing said each static image;
wherein said second dynamic image creation step creating gradually changing dynamic images from said each static image stored in the static image storage memory and said each static image extracted by said image extraction step (S256, S386, S554).

14. The dynamic image preparation method according to claim 9 to 13, having a change pattern storage memory for storing a plurality of patterns which change gradually and are created in said second dynamic image creation step, the method further comprising:
a change pattern selection step (S236-S242, S246,S252, S310, S336-S342, S356-S362, S410-S416, S474-S482) for selecting a specific change pattern from the change patterns stored in the change pattern storage memory;
wherein said second dynamic image creation step (S388) creating dynamic images which change gradually based on said specific change pattern selected by said change pattern selection step (S236-S242, S246-S252, S310, S336-S342, S356-S362, S410-S416, S474-S482).

15. The dynamic image preparation method according to claim 9 to 14, wherein said acquiring step (S10-S22) comprising an imaging step (S22) for recording dynamic images.

16. The dynamic image preparation method according to claim 9 to 14, wherein said acquiring step (S10-S22) acquires said dynamic images from an external network.

17. A computer program product comprising a computer readable medium having computer readable program code embodied thereon, the program code being adapted to carry out all steps of any of claims 9 to 16.

## Patentansprüche

1. Drahtloskommunikationsvorrichtung für ein Mobiltelefonsystem mit:
einer Erfassungseinrichtung (118, 129, 130) zur Erfassung einer Mehrzahl von dynamischen Bildern;
einer Speichereinrichtung für dynamische Bilder (1244) zur Speicherung einer Mehrzahl der durch die Erfassungseinrichtung (118, 129, 130) erfassten dynamischen Bildern; und
einer Auswahleinrichtung (106, 107) zur Auswahl von zumindest einem dynamischen Bild der Mehrzahl von dynamischen Bildern, die in der Speichereinrichtung für dynamische Bilder (1244) gespeichert sind, gemäß einer Benutzereingabe;
einer Bearbeitungseinrichtung (131) zur Bearbeitung der durch die Auswahleinrichtung (106, 107) ausgewählten dynamischen Bilder;
einer Dateiumwandlungseinrichtung (131) zur Umwandlung der durch die Bearbeitungseinrichtung (131) bearbeiteten dynamischen Bilder in eine Datei, die eine Übertragung durch das Mobiltelefonsystem zulässt; und
eine Drahtlosübertragungseinrichtung (103, 121, 1221) zur Ausführung der drahtlosen Übertragung der umgewandelten Datei, die an eine elektronische Postnachricht angehängt ist,
**gekennzeichnet durch**
eine erste Bilddatenerzeugungseinrichtung (122) zur Erzeugung sich graduell ändernder dynamischer Bilddaten auf Basis von entweder einem obersten Einzelbild des ersten dynamischen Bildes des **durch** die Auswahleinrichtung ausgewählten zumindest einen dynamischen Bildes oder einem letzten Einzelbild des letzten dynamischen Bildes des von der Auswahleinrichtung ausgewählten zumindest einen dynamischen Bildes;
einer Bestimmungseinrichtung (122) zur Bestimmung der Anzahl der dynamischen Bilder, die **durch** die Auswahleinrichtung (106, 107) ausgewählt wurden;
einer zweiten Bilddatenerzeugungseinrichtung (122) zur Erzeugung sich graduell ändernder dynamischer Bilder auf Basis eines letzten Frames bzw. eines obersten Frames von zwei nacheinander ausgewählten dynamischen Bildern, wenn die Anzahl der **durch** die Auswahleinrichtung ausgewählten dynamischen Bilder als größer als Eins bestimmt wurde;
einer Kombinationseinrichtung (131) zur Kombination des **durch** die Auswahleinrichtung ausgewählten zumindest einen dynamischen Bildes und der sich graduell ändernden dynamischen Bilddaten, die **durch** die erste oder die zweite Bilddatenerzeugungseinrichtung (122) erzeugt wurden, in ein neues dynamisches Bild;
wobei die Dateiumwandlungseinrichtung (131) das neue dynamische Bild in eine Datei umwandelt, die in eine Kapazität passt, die eine Übertragung **durch** das Mobiltelefonsystem zulässt.

2. Drahtloskommunikationsvorrichtung nach Anspruch 1, des weiteren umfassend:
eine Bildextrahiereinrichtung (122, 131) zur Extrahierung statischer Bilder aus den durch die Erfassungseinrichtung (118, 129, 130) erfassten dynamischen Bildern.

3. Drahtloskommunikationsvorrichtung nach Anspruch 2, wobei die Bildextrahiereinrichtung (122, 131) dazu eingerichtet ist, ein oberstes Einzelbild der durch die Erfassungseinrichtung (118, 129, 130) erfassten dynamischen Bilder zu extrahieren.

4. Drahtloskommunikationsvorrichtung nach Anspruch 2, wobei die Bildextrahiereinrichtung (122, 131) dazu eingerichtet ist, ein letztes Einzelbild der durch die Erfassungseinrichtung (118, 129, 130) erfassten dynamischen Bilder zu extrahieren.

5. Drahtloskommunikationsvorrichtung nach einem der Ansprüche 2 bis 4, des weiteren umfassend:
eine Speichereinrichtung für statische Bilder (1244) zur Speicherung der statischen Bilder;
wobei die zweite dynamische Bilderzeugungseinrichtung dazu eingerichtet ist, sich graduell verändernde dynamische Bilder aus den in der Speichervorrichtung für statische Bilder (1244) gespeicherten statischen Bildern und den durch die Bildextrahiereinrichtung (118, 129, 130) extrahierten statischen Bildern zu erzeugen.

6. Drahtloskommunikationsvorrichtung nach einem der Ansprüche 2 bis 5 des weiteren umfassend:
eine Speichereinrichtung für Änderungsmuster (1252) zur Speicherung einer Mehrzahl von Mustern, die sich graduell ändern und in der zweiten dynamischen Bilderzeugungseinrichtung erzeugt werden; und
eine Änderungsmusterauswahleinrichtung (106,107) zur Auswahl eines bestimmten Änderungsmusters aus den in der Speichereinrichtung für Änderungsmuster (1252) gespeicherten Änderungsmustern;
wobei die zweite dynamische Bilderzeugungseinrichtung dazu eingerichtet ist, dynamische Bilddaten zu erzeugen, die sich graduell ändern, auf Basis des durch die Änderungsmusterauswahleinrichtung (106, 107) ausgewählten bestimmten Änderungsmusters.

7. Drahtloskommunikationsvorrichtung nach einem der Ansprüche 1 bis 6, wobei die Erfassungseinrichtung (118, 129, 130) eine Bildgebungseinrichtung (118, 130) zur Aufzeichnung dynamischer Bilder umfasst.

8. Drahtloskommunikationsvorrichtung nach einem der Ansprüche 1 bis 6, wobei die Erfassungseinrichtung die dynamischen Bilder von einem Netzwerk außerhalb der Vorrichtung erfasst.

9. Aufbereitungsverfahren für dynamische Bilder zur Verarbeitung von Bilddaten in einer Drahtloskommunikationsvorrichtung für ein Mobiltelefonsystem, umfassen die Schritte:
Erfassen (S10-S22) einer Mehrzahl von dynamischen Bildern;
Speichern einer Mehrzahl der erfassten dynamischen Bilder; und
Auswählen von zumindest einem dynamischen Bild der Mehrzahl der gespeicherten dynamischen Bilder gemäß einer Benutzereingabe;
Bearbeiten des zumindest einen ausgewählten dynamischen Bildes;
Umwandeln (S272, S382, S550) des bearbeiteten dynamischen Bildes in eine Datei, die eine Übertragung durch das Mobiltelefonsystem zulässt; und
drahtlose Übertragung (S110-S114) der an eine elektronische Postnachricht angehängten umgewandelten Datei,
**gekennzeichnet durch**
Erzeugen sich graduell ändernder dynamischer Bilddaten auf Basis von entweder einem obersten Einzelbild des ersten dynamischen Bildes des zumindest einen ausgewählten dynamischen Bildes oder einem letzten Einzelbild des letzten dynamischen Bildes des zumindest einen ausgewählten dynamischen Bildes;
Bestimmen der Anzahl der ausgewählten dynamischen Bilder;
Erzeugen sich graduell ändernder dynamischer Bilddaten auf Basis eines letzten Einzelbildes bzw. eines obersten Einzelbildes von zwei nacheinander aus dem zumindest einen ausgewählten dynamischen Bild ausgewählten dynamischen Bilder, wenn die Anzahl der ausgewählten dynamischen Bilder als größer als Eins bestimmt wurde;
Kombinieren des zumindest einen ausgewählten dynamischen Bildes und der erzeugten sich graduell ändernden dynamischen Bilddaten in ein neues dynamisches Bild;
wobei der Umwandlungsschritt (S272, S382, S550) das neue dynamische Bild in eine Datei umwandelt, die in eine Kapazität passt, die eine Übertragung **durch** das Mobiltelefonsystem zulässt.

10. Verfahren nach Anspruch 9, des weiteren umfassend:
einen Bildextrahierschritt (S256, S386, S554) zu Extrahierung statischer Bilder aus den von dem Erfassungsschritt (S10-S22) erfassten dynamischen Bilder.

11. Verfahren nach Anspruch 10, wobei der Bildextrahierschritt (S256, S386, S554) ein oberstes Einzelbild der durch den Erfassungsschritt (S10-S22) erfassten dynamischen Bilder extrahiert.

12. Verfahren nach Anspruch 10, wobei der Bildextrahierschritt (S256, S386, S554) ein letztes Einzelbild der durch den Erfassungsschritt (S10-S22) erfassten dynamischen Bildern extrahiert.

13. Verfahren nach einem der Ansprüche 10 bis 12 mit einem Speicher für statische Bilder zur Speicherung der statischen Bilder;
wobei der zweite dynamische Bilderzeugungsschritt sich graduell ändernde dynamische Bilder aus den in dem Speicher für statische Bilder gespeicherten statischen Bilder und den durch den Bildextrahierschritt (S256, S386, S554) extrahierten statischen Bildern erzeugt.

14. Verfahren nach einem der Ansprüche 9 bis 13 mit einem Speicher für Änderungsmuster zur Speicherung einer Mehrzahl von Mustern, die sich graduell ändern und in dem zweiten dynamischen Bilderzeugungsschritt erzeugt wurden, wobei das Verfahren des weiteren umfasst:
einen Änderungsmusterauswahlschritt (S236-S242, S246, S252, S310, S336-S342, S356-S362, S410-S416, S474-S482) zur Auswahl eines bestimmten Änderungsmusters aus den in dem Speicher für Änderungsmuster gespeicherten Änderungsmustern;
wobei der zweite dynamische Bilderzeugungsschritt (S388) dynamische Bilddaten, die sich graduell ändern, auf Basis des in dem Änderungsmusterauswahlschritt (S236-S242, S246-S252, S310, S336-342, S356-S362, S410-S416, S474-S482) ausgewählten bestimmten Änderungsmusters erzeugt.

15. Verfahren nach einem der Ansprüche 9 bis 14, wobei der Erfassungsschritt (S10-S22) einen Bildgebungsschritt (S22) zur Aufzeichnung dynamischer Bilder umfasst.

16. Verfahren nach einem der Ansprüche 9 bis 14, wobei der Erfassungsschritt (S10-S22) die dynamischen Bilder aus einem externen Netzwerk erfasst.

17. Computerprogrammprodukt mit einem computerlesbaren Medium, das computerlesbaren Programmcode enthält, wobei der Programmcode dazu eingerichtet ist, alle Schritte von einem der Ansprüche 9 bis 16 auszuführen.

## Revendications

1. Dispositif de communication sans fil appliqué à un système de téléphonie mobile, comprenant :
un moyen d'acquisition (118, 129, 130) pour acquérir une pluralité d'images dynamiques ;
un moyen de stockage d'image dynamique (1244) pour stocker une pluralité desdites images dynamiques acquises par ledit moyen d'acquisition (118, 129, 130) ; et
un moyen de sélection (106, 107) pour sélectionner au moins une image dynamique de la pluralité d'images dynamiques stockées dans ledit moyen de stockage d'image dynamique (1244) conformément à une entrée d'utilisateur ;
un moyen d'édition (131) pour éditer lesdites images dynamiques sélectionnées par ledit moyen de sélection (106, 107) ;
un moyen de conversion de fichier (131) pour convertir lesdites images dynamiques éditées par ledit moyen d'édition (131) en un fichier qui permet la transmission par ledit système de téléphonie mobile ; et
un moyen de transmission sans fil (103, 121, 1221) pour exécuter la transmission sans fil dudit fichier converti joint à un message de courrier électronique,
**caractérisé par**
un premier moyen de création de données d'image (122) pour créer des données d'image dynamique changeant progressivement sur la base de soit une première trame de la première image dynamique de la au moins une image dynamique sélectionnée par le moyen de sélection soit une dernière trame de la dernière image dynamique de la au moins une image dynamique sélectionnée par le moyen de sélection ;
un moyen de détermination (122) pour déterminer le nombre d'images dynamiques sélectionnées par le moyen de sélection (106, 107) ;
un second moyen de création de données d'image (122) pour, lorsque le nombre d'images dynamiques sélectionnées par le moyen de sélection est déterminé comme étant supérieur à un, créer des données d'image dynamique changeant progressivement sur la base d'une dernière trame et d'une première trame de deux images dynamiques sélectionnées consécutivement, respectivement ;
un moyen de combinaison (131) pour combiner la au moins une image dynamique sélectionnée par le moyen de sélection et les données d'image dynamique changeant progressivement créées par au moins un des premier et second moyens de création de données d'image (122) en une nouvelle image dynamique ;
dans lequel ledit moyen de conversion de fichier (131) convertit ladite nouvelle image dynamique en un fichier qui rentre dans une capacité qui permet la transmission par ledit système de téléphonie mobile.

2. Dispositif de communication sans fil selon la revendication 1, comprenant en outre :
un moyen d'extraction d'image (122, 131) pour extraire des images statiques desdites images dynamiques acquises par ledit moyen d'acquisition (118, 129, 130).

3. Dispositif de communication sans fil selon la revendication 2, dans lequel ledit moyen d'extraction d'image (122, 131) est adapté pour extraire une première image de trame desdites images dynamiques acquises par ledit moyen d'acquisition (118, 129, 130).

4. Dispositif de communication sans fil selon la revendication 2, dans lequel ledit moyen d'extraction d'image (122, 131) est adapté pour extraire une dernière image de trame desdites images dynamiques acquises par ledit moyen d'acquisition (118, 129, 130).

5. Dispositif de communication sans fil selon les revendications 2 à 4, comprenant en outre :
un moyen de stockage d'image statique (1244) pour stocker chaque dite image statique ;
dans lequel ledit second moyen de création d'image dynamique est adapté pour créer des images dynamiques changeant progressivement à partir de chaque dite image statique stockée dans ledit moyen de stockage d'image statique (1244) et de chaque dite image statique extraite par ledit moyen d'extraction d'image (118, 129, 130).

6. Dispositif de communication sans fil selon les revendications 2 à 5, comprenant en outre :
un moyen de stockage de modèle de changement (1252) pour stocker une pluralité de modèles qui changent progressivement et sont créés dans ledit second moyen de création d'image dynamique ; et
un moyen de sélection de modèle de changement (106, 107) pour sélectionner un modèle de changement spécifique parmi les modèles de changement stockés dans ledit moyen de stockage de modèle de changement (1252) ;
dans lequel ledit second moyen de création d'image dynamique est adapté pour créer des images dynamiques qui changent progressivement sur la base dudit modèle de changement spécifique sélectionné par ledit moyen de sélection de modèle de changement (106, 107).

7. Dispositif de communication sans fil selon les revendications 1 à 6, dans lequel ledit moyen d'acquisition (118, 129, 130) comprend un moyen d'imagerie (118, 130) pour enregistrer des images dynamiques.

8. Dispositif de communication sans fil selon les revendications 1 à 6, dans lequel ledit moyen d'acquisition acquiert lesdites images dynamiques depuis un réseau externe dudit dispositif.

9. Procédé de préparation d'image dynamique pour traiter des données d'image dans un dispositif de communication sans fil appliqué à un système de téléphonie mobile, le procédé comprenant les étapes consistant à :
acquérir (S10-S22) une pluralité d'images dynamiques ;
stocker une pluralité desdites images dynamiques acquises ; et
sélectionner au moins une image dynamique de ladite pluralité d'images dynamiques stockées conformément à une entrée d'utilisateur ;
éditer la au moins une image dynamique sélectionnée ;
convertir (S272, S382, S550) les images dynamiques éditées en un fichier qui permet la transmission par ledit système de téléphonie mobile ; et
la transmission sans fil (S110-S114) dudit fichier converti joint à un message de courrier électronique,
**caractérisé par**
la création de données d'image dynamique changeant progressivement sur la base de soit une première trame de la première image dynamique de la au moins une image dynamique sélectionnée soit une dernière trame de la dernière image dynamique de la au moins une image dynamique sélectionnée ;
la détermination du nombre d'images dynamiques sélectionnées ;
la création, lorsque le nombre d'images dynamiques sélectionnées est déterminé comme étant supérieur à un, de données d'image dynamique changeant progressivement sur la base d'une dernière trame et d'une première trame de deux images dynamiques sélectionnées consécutivement, respectivement, de la au moins une image dynamique sélectionnée ;
la combinaison de la au moins une image dynamique sélectionnée et des données d'image dynamique changeant progressivement créées en une nouvelle image dynamique ;
ladite étape de conversion (S272, S382, S550) convertit ladite nouvelle image dynamique en un fichier qui rentre dans une capacité qui permet la transmission par ledit système de téléphonie mobile.

10. Procédé de préparation d'image dynamique selon la revendication 9, comprenant en outré :
une étape d'extraction d'image (S256, S386, S554) pour extraire des images statiques desdites images dynamiques acquises par ladite étape d'acquisition (S10-S22).

11. Procédé de préparation d'image dynamique selon la revendication 10, dans lequel ladite étape d'extraction d'image (S256, S386, S554) extrait une première image de trame desdites images dynamiques acquises par ladite étape d'acquisition (S10-S22).

12. Procédé de préparation d'image dynamique selon la revendication 10, dans lequel ladite étape d'extraction d'image (S256, S386, S554) extrait une dernière image de trame desdites images dynamiques acquises par ladite étape d'acquisition (S10-S22).

13. Procédé de préparation d'image dynamique selon les revendications 10 à 12, ayant une mémoire de stockage d'image statique pour stocker chaque dite image statique ;
dans lequel ladite second étape de création d'image dynamique crée des images dynamiques changeant progressivement à partir de chaque dite image statique stockée dans la mémoire de stockage d'image statique et de chaque dite image statique extraite par ladite étape d'extraction d'image (S256, S386, S554).

14. Procédé de préparation d'image dynamique selon les revendications 9 à 13, ayant une mémoire de stockage de modèle de changement pour stocker une pluralité de modèles qui changent progressivement et sont créés à ladite seconde étape de création d'image dynamique, le procédé comprenant en outré:
une étape de sélection de modèle de changement (S236-S242, S246-S252, S310, S336-S342, S356-S362, S410-S416, S474-S482) pour sélectionner un modèle de changement spécifique parmi les modèles de changement stockés dans la mémoire de stockage de modèle de changement ;
dans lequel ladite seconde étape de création d'image dynamique (S388) crée des images dynamiques qui changent progressivement sur la base dudit modèle de changement spécifique sélectionné par ladite étape de sélection de modèle de changement (S236-S242, S246-S252, S310, S336-S342, S356-S362, S410-S416, S474-S482).

15. Procédé de préparation d'image dynamique selon les revendications 9 à 14, dans lequel ladite étape d'acquisition (S10-S22) comprend une étape d'imagerie (S22) pour enregistrer des images dynamiques.

16. Procédé de préparation d'image dynamique selon les revendications 9 à 14, dans lequel ladite étape d'acquisition (S10-S22) acquiert lesdites images dynamiques depuis un réseau externe.

17. Produit de programme informatique comprenant un support lisible par ordinateur ayant un code de programme lisible par ordinateur incorporé dessus, le code de programme étant adapté pour exécuter toutes les étapes de l'une quelconque des revendications 9 à 16.
